(19) Europäisches Patentamt
European Patent Office
Office européen des brevets

(11) **EP 2 337 114 B1**

(12) **EUROPEAN PATENT SPECIFICATION**

(45) Date of publication and mention
of the grant of the patent:
**02.11.2016 Bulletin 2016/44**

(51) Int Cl.:
*H01M 2/16* (2006.01)     *B32B 27/18* (2006.01)
*B32B 27/20* (2006.01)   *H01M 10/052* (2010.01)
*H01M 2/14* (2006.01)    *B32B 27/08* (2006.01)
*B32B 27/32* (2006.01)

(21) Application number: **09811480.4**

(22) Date of filing: **01.09.2009**

(86) International application number:
**PCT/JP2009/065231**

(87) International publication number:
**WO 2010/026954 (11.03.2010 Gazette 2010/10)**

(54) **LAMINATED POROUS FILM FOR SEPARATOR**

LAMINIERTE PORÖSE FOLIE FÜR EINEN SEPARATOR

FILM POREUX STRATIFIÉ POUR SÉPARATEUR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:   **03.09.2008   JP 2008226081
03.09.2008   JP 2008226120
18.11.2008   JP 2008294454**

(43) Date of publication of application:
**22.06.2011   Bulletin 2011/25**

(73) Proprietor: **Mitsubishi Plastics, Inc.**
**Tokyo 103-0021 (JP)**

(72) Inventors:
• **YAMAMOTO Miho**
**Nagahama-shi**
**Shiga 526-8660 (JP)**
• **ARAI Hidetaka**
**Nagahama-shi**
**Shiga 526-8660 (JP)**
• **NEMOTO Tomoyuki**
**Nagahama-shi**
**Shiga 526-8660 (JP)**
• **KATSUHARA Kazunari**
**Nagahama-shi**
**Shiga 526-8660 (JP)**
• **YAMADA Takeyoshi**
**Nagahama-shi**
**Shiga 526-8660 (JP)**

(74) Representative: **Boult Wade Tennant**
**Verulam Gardens**
**70 Gray's Inn Road**
**London WC1X 8BT (GB)**

(56) References cited:
**EP-A1- 1 787 805        JP-A- 9 255 804
JP-A- 10 302 747      JP-A- 2006 089 727
JP-A- 2008 254 288    JP-A- 2008 307 890
JP-A- 2008 311 220    US-A1- 2008 118 827**

• **DATABASE WPI Week 200628 Thomson
Scientific, London, GB; AN 2006-268084
XP002665684, -& JP 2006 089727 A (NEW JAPAN
CHEM CO LTD) 6 April 2006 (2006-04-06)**

**Description**

TECHNICAL FIELD

0001 The present invention relates to a laminated porous film for a separator of a battery and more particularly to a laminated porous film which can be utilized as a separator for a nonaqueous electrolyte battery.

BACKGROUND ART

0002 A secondary battery is widely used as the power source of OA, FA, household appliances, and portable devices such as communication instruments. A lithium-ion secondary battery has a favorable volumetric efficiency when it is mounted on apparatuses and allows the apparatuses to be compact and lightweight. Therefore there is an increase in the use of portable devices in which the lithium-ion secondary battery is mounted. Owing to research and development of a large secondary battery which has been made in the field of load leveling, UPS, an electric car, and in many fields relating to the problem of energy and environment, the large secondary battery is allowed to have a large capacity, a high output, a high voltage, and an excellent long-term storage stability. Therefore the lithium-ion secondary battery which is a kind of the nonaqueous electrolyte secondary battery has widely spread in its use.

0003 The lithium-ion secondary battery is so designed that the upper limit of the working voltage thereof is usually 4.1V to 4.2V. Because electrolysis occurs in an aqueous solution at such a high voltage, the aqueous solution cannot be used as an electrolyte. Therefore as an electrolyte capable of withstanding a high voltage, a so-called nonaqueous electrolyte in which an organic solvent is used is adopted.

As a solvent for the nonaqueous electrolyte, an organic solvent having a high permittivity which allows a large number of lithium ions to be present is widely used. Organic carbonate ester such as polypropylene carbonate or ethylene carbonate is mainly used as the organic solvent having a high permittivity. As a supporting electrolyte serving as the ion source of the lithium ion in the solvent, an electrolyte having a high reactivity such as lithium phosphate hexafluoride is used in the solvent by melting it therein.

0004 A separator is interposed between the positive electrode of the lithium-ion secondary battery and its negative electrode to prevent an internal short circuit from occurring. Needless to say, the separator is demanded to have insulating performance as its role. In addition the separator is required to have a porous structure so that it has air permeability to allow the movement of the lithium ion and a function of diffusing and holding the electrolyte. To satisfy these demands, a porous film is used as the separator.

0005 Because batteries having a high capacity are used recently, the degree of importance for the safety of the battery has increased.

A shut-down property (hereinafter referred to as SD property) contributes to the safety of the separator for the battery. The SD property has the function of closing pores when the battery has a high temperature of 100°C to 140°C, thus cutting ion conduction inside the battery, whereby the temperature inside the battery can be prevented from rising. To use the porous film as the separator for the battery, it is necessary for the porous film to have the SD property.

The SD property is an important property contributing to the safety of the battery when the separator for the battery is used by incorporating it in the lithium-ion secondary battery. For example, when the battery becomes abnormal in its operation and has a high temperature, pores are closed and thus ion conduction inside the battery is cut off in the separator for the battery having the shut-down property. Thereby it is possible to prevent the temperature inside the battery from rising. The degree of importance for the safety of the battery has increased, because batteries having a high capacity are used recently. Therefore the need of the SD property has further increased.

0006 As another property contributing to the safety of the separator for the battery, a break-down property (hereinafter referred to as BD property) is known. The BD property has a function of preventing the film from being broken and keeping the positive electrode and the negative electrode separated from each other even when generated heat does not drop and the temperature of the battery becomes high (not less than 160°C). The BD property allows insulation to be maintained even at a high temperature and prevents a wide range of short circuit from occurring between the electrodes, thereby preventing the occurrence of an accident such as firing caused by an abnormal heat generation of the battery. Therefore to use the porous film as the separator for the battery, it is preferable for the porous film to have the BD property. It is also preferable that a break-down temperature (hereinafter referred to as "BD temperature") is as high as possible.

The "BD temperature" means the lowest temperature of temperatures at which the laminated porous film of the present invention is broken when it is heated by a method described in the examples of the present invention.

0007 To comply with the above-described demand, in Patent No. 2883726 (patent document 1), there is disclosed the method of producing the separator for the battery consisting of a polyethylene film and a polypropylene film. The polyethylene film and the polypropylene film layered one upon another are stretched in one axial direction at two stages by changing temperature to make both films porous.

The above-described production method requires a strict control for production conditions and it cannot be said that the productivity is good. For example, at the step of forming the film layers to be laminated one upon another before the laminated film is made porous, a higher construction is controlled at a high draft ratio. It is very difficult to stably form the laminated film at such a high draft ratio. To generate a porous structure, it is necessary to perform multistage stretching at two stages of a low-temperature region and a high-temperature region and at a low stretching speed. Thus the stretching speed is limited greatly and thus production method has a very low productivity.

In addition the separator produced by the above-described method has a problem that the separator is very weak when it is torn in a direction perpendicular to a stretching direction and is liable to crack in the stretching direction.

0008 Various methods of obtaining a porous film by stretching a polypropylene sheet containing crystal have been proposed. As the characteristic of the method of producing the porous film, the porous structure is obtained by utilizing the β crystal. To obtain the porous structure by stretching the sheet, it is preferable that an unstretched sheet contains a lot of the β crystal. This method is a biaxial stretching method generally adopted and has a very high productivity as a method of obtaining the porous film.

0009 For example, in Patent No. 1953202 (patent document 2), there is proposed the method of producing the porous sheet by forming the resin composition in which polypropylene containing a predetermined amount of the filler and the β crystal nucleating agent into a sheet and stretching the sheet at a specific stretching condition. In Patent No. 2509030 (patent document 3), there is proposed the micro-porous film, made of very transparent polypropylene, which is obtained by biaxially stretching the original polypropylene film having a high (K>0.5) β crystal content rate. In Patent No. 3443934 (patent document 4), there is proposed the method of producing the porous sheet by crystallizing polypropylene containing a particular amide compound in a specific condition to obtain the solidified material and stretching the solidified material.

0010 These polypropylene porous films are superior to a polyethylene porous film in the BD property because the crystal melting temperature of polypropylene is high. But owing to the above-described property, the polypropylene porous films are incapable of displaying the SD property. Therefore the polypropylene porous films have a problem that the use thereof as the separator for the battery does not ensure the safety of the battery.

0011 In Japanese Laid-Open Patent Application No. 2000-30683 (patent document 5), there is proposed the separator for the battery containing the polypropylene micro-porous film produced from the precursor containing a β nucleus. In addition description is made on the other layer of the separator to which the function of improving the safety of the shut-off function and the like is imparted. But an example in which the shut-off function is imparted to the layer is not described. Merely the provision of the polyethylene layer makes it difficult to provide the battery with the function of improving the safety thereof.

EP 1 787 805 A1 discloses a multilayer film having at least one layer containing polyethylene and a layer containing polypropylene. The film has an air permeability of not less than 50 seconds/100ml and not more than 1000 seconds/100ml.

PRIOR ART DOCUMENT

PATENT DOCUMENT

0012

Patent document 1: Patent No. 2883726
Patent document 2: Patent No. 1953202
Patent document 3: Patent No. 2509030
Patent document 4: Patent No. 3443334
Patent document 5: Japanese Patent Application Laird-Open No. 2000-30683

SUMMARY OF THE INVENTION

PROBLEM TO BE SOLVED BY THE INVENTION

0013 The present invention has been made to solve the shove-described problem. Therefore it is an object of the present invention to provide a laminated porous film, for a separator of a battery, which has an excellent air-permeable performance contributing two the electrical performance thereof and in addition a shut-down property which is one of important properties in securing safety off the battery.

MEANS FOR SOLVING THE PROBLEM

0014 To solve the above-described problem, in the first invention, there is provided a laminated porous film for a separator comprising a layer A consisting of a porous layer containing polypropylene resin at not less than 50 mass % and a $\beta$ crystal nucleating agent thereof and a layer 3 consisting of a porous layer containing polyethylene resin at not less than 50 mass %; and having $\beta$ activity,
wherein an electric resistance at 25°C is no more than 10Ω; and an electric resistance after the laminated porous film is heated at 135°C for 5 seconds is not less than 100Ω or/and an air permeability at 25°C is not tore than 1000 seconds/100ml; and an air permeability after the laminated porous film is heated at 135°C for 5 seconds is not less than 10000 seconds/100ml.

0015 in the second invention, there is provided a Laminated porous film for a separator comprising: a layer A consisting of a porous layer containing polypropylene resin at not less than 50 mass % and a $\beta$ crystal nucleating agent and a layer B consisting of a porous layer containing a mixed resin composition containing polyethylene resin and a crystal nucleating agent at not less 50 mass %; and having activity.

0016 It is preferable that in the second intention, as specified in the first invention, an electric resistance at 25°C is not more than 10Ω; and as electric resistance after the laminated porous film is heated at 135°C for 5 seconds is not less than 100Ω or/and an air permeability at 25°C is not more than 1000 seconds/100ml; and an air permeability after the laminated porous film is heated at 135°C for 5 seconds is not less than 10000 seconds/100ml.

0017 It is preferable that the layer A contains a $\beta$ crystal nucleating agent.

0018 It is preferable that the crystal nucleating agent contained in the layer B is higher fatty acid ester.

0019 It is preferable that the layer B contains at least one compound selected from among modified polyolefin resin, alicyclic saturated hydrocarbon resin or modified substances thereof, an ethylene copolymer, and wax.

0020 In the laminated porous films of the first and second inventions for the separator, at least two porous layers are layered one upon another. One of the two porous layers is the layer A containing the polypropylene resin as its main component. The other of the two porous layers is the layer B containing the polyethylene resin as its main component. At least one of the layers A and B has the $\beta$ activity.

0021 The layer B contains the polyethylene resin as the main component thereof and has a shut-down temperature (hereinafter referred to as SD temperature) lower than that of the layer A.

In the present invention, "SD temperature" means the lowest temperature of temperatures at which pores close.

More specifically the SD temperature means the lowest temperature of temperatures at which the electric resistance of the laminated porous film after the laminated porous film is heated becomes not less than 10 times larger than the electric resistance thereof before the laminated porous film is heated, when the laminated porous film is heated by the method described in the examples of the present invention or/and the lowest temperature of temperatures at which the air permeability of the laminated porous film after the laminated porous film is heated becomes not less than 10 times larger than the air permeability thereof before the laminated porous film is heated, when the laminated porous film is heated by the method described in the examples of the present invention.

0022 Because at least one layer of the laminated porous film of the present invention for the separator has the $\beta$ activity, the laminated porous film can be provided with a fine porous layer and thus is capable of displaying an excellent electrical property.

0023 As to whether the laminated porous film of the present invention for the separator of the battery has the $\beta$ activity, when the crystal melting peak temperature derived from the $\beta$ crystal is detected by a differential scanning calorimeter or when a diffraction peak derived from the $\beta$ crystal is detected by an X-ray diffraction measuring apparatus described later, it is judged that the laminated porous film has the $\beta$ activity.

The $\beta$ activity is measured in the state of the laminated porous film in the case where the laminated porous film of the present invention for the separator consists of the layers A and B and in the case where the laminated porous film is composed of the layers A and B and other porous layers.

0024 It is preferable that the layer B contains at least one compound (X) selected from among modified polyolefin resin, alicyclic saturated hydrocarbon resin or modified substances thereof, an ethylene copolymer, and wax.

0025 The laminated porous film of the present invention for the separator is biaxially stretched.

It is preferable that the ratio of a MD tensile strength, to a TD tensile strength, is set to not less than 0.3 nor more than 15.

The ratio of the MD tensile strength to the is tensile strength is measured by the method to be described in the examples of the present invention.

0026 It is preferable that in the method of the present invention of producing a laminated porous film for a separator having a layer A containing polypropylene resin at not less than 50 mass % and a $\beta$ nucleating agent and a layer B containing polyethylene resin at not less than 50 mass % and $\beta$ activity, the layer A and the layer B are layered one upon another in not less than two layers by co-extrusion and biaxially stretched to make the layers A and B porous.

0027 The present invention provides a battery in which the laminated porous film of the present invention for a battery is incorporated.

EFFECT OF THE INVENTION

0028 The laminated porous film of the present invention for the separator has the layer A containing the polypropylene resin as the main component thereof and the layer B containing the polyethylene resin as the main component thereof and has the β activity. Therefore the laminated porous film maintains the break-down property of the conventional laminated porous film made of the polypropylene resin and has the shut-down property of closing pores in a proper temperature range.

In addition because the laminated porous film of the present invention for the separator has the β activity, it has pores and is capable of securely obtaining sufficient intercommunicable performance. Because the layer A is capable of holding a sufficient strength, the laminated porous film is excellent in its mechanical strength such as its pin puncture strength and tear strength. Therefore the laminated porous film is useful as the separator for the battery from the standpoint of the maintenance of its construction and impact resistance.

It is unnecessary to strictly control production conditions of the laminated porous film of the present invention for the separator and possible to produce it easily and efficiently.

BRIEF DESCRIPTION OF THE DRWINGS

0029

Fig. 1 is a partly cut-out perspective view of a nonaqueous electrolyte battery accommodating a laminated porous film of the present invention as a separator for a battery.
Fig. 2(A) and (B) is an explanatory view for explaining a method of fixing a film at a measuring time.

BEST MODE FOR CARRYING OUT THE INVENTION

0030 The first through third embodiments of the laminated porous film of the present invention for a separator are described in detail below.

Unless specifically described, the expression of "main component" in first through third embodiments includes a case in which a resin composition contains components other than the main component in a range where the function of the main component is not inhibited. Although the content ratio of the main component is not specified, the expression of "main component" also includes a case in which the main component is contained the resin composition at not less than 50 mass %, favorably not less than 70 mass %, and especially favorably not less than 90 mass % (including 100%).

Unless otherwise described, the description of "X to Y" (X, Y are any numbers) is intended to mean "not less than X nor more than Y" and also includes the intention of "it is preferable that the number is larger than X and smaller than Y".

0031 The laminated porous film of the first through third embodiments for the separator has at least two porous layers layered one upon another. One of the two porous layers is a layer A containing polypropylene resin as its main component. The other of the two porous layers is a layer B containing polyethylene resin as its main component. The laminated porous film has β activity.

0032 An important characteristic of first through third laminated porous films of the present invention for the separator is that they have the β activity.

The β activity can be considered as an index indicating that the polypropylene resin in a membrane material generates β crystal before the membrane material is stretched. When the polypropylene resin in the membrane material generates then β crystal before the membrane material is stretched, pores are formed by stretching the membrane material. Thereby it is possible to obtain the separator having an air-permeable property.

0033 Whether the laminated porous film for the separator has the β activity is judged according to whether a crystal melting peak temperature derived from the β crystal of the polypropylene resin is detected by performing differential thermal analysis of the laminated porous film with a differential scanning calorimeter.

More specifically after the temperature of the laminated porous film is raised from 25°C to 240°C at a heating speed of 10°C/minute, the temperature is held at 240°C for one minute. After the temperature of the laminated porous film is dropped from 240°C to 25°C at a cooling speed of 10°C/minute, the temperature is held at 240°C for one minute. When the crystal melting peak temperature (Tmβ) derived from the β crystal is detected at re-raising of the temperature of the laminated porous film from 25°C to 240°C at the heating speed of 10°C/minute, it is judged that the laminated porous film has the β activity.

0034 They activity degree of the laminated porous film for the separator is computed based on an equation shown below by using a detected crystal melting heat amount ($\Delta Hm\alpha$) derived from $\alpha$ crystal of the polypropylene resin and a detected crystal melting heat amount (ΔHmβ) derived from the β crystal.

$$\beta \text{ activity degree (\%)} = [\Delta Hm\beta/(\Delta Hm\beta + \Delta Hm\alpha)] \times 100$$

For example, in the case of homo-propylene, the β activity degree can be computed from the crystal melting heat amount (ΔHmβ), derived from the β crystal, which is detected mainly in a range not less than 145°C and less than 160°C and from the crystal melting heat amount (ΔHmα), derived from the α crystal, which is detected mainly in a range not less than 160°C nor more than 175°C. In the case of random polypropylene in which ethylene is copolymerized at 1 to 4 mol%, the β activity degree can be computed from the crystal melting heat amount (ΔHmβ), derived from the β crystal, which is detected mainly in a range not less than 120°C and less than 140°C and from the crystal melting heat amount (ΔHmα), derived from the a crystal, which is detected mainly in a range not less than 140°C nor more than 165°C.

0035 It is favorable that the β activity degree of the laminated porous film for the separator is high. Specifically the β activity degree of the laminated porous film is favorably not less than 20%, more favorably not less than 40%, and most favorably not less than 60%. When the laminated porous film has the β activity degree not less than 20%, a large amount of the β crystal of the polypropylene can be generated in the membrane material before the membrane material is stretched. Thereby pores fine and homogeneous can be formed by stretching the membrane material. Consequently the obtained laminated porous film has an excellent electrical performance.

The upper limit value of the β activity degree is not limited to a specific value. The higher the β activity degree is, the more effectively the above-described effect is obtained. Therefore it is preferable that the upper limit of the β activity degree is close to 100%.

0036 Whether the laminated porous film has the P activity can be also judged based on a diffraction profile obtained by performing X-ray diffraction measurement of the laminated porous film which has undergone specific heat treatment.

In detail, after the laminated porous film for the separator is thermally treated at 170 to 190°C higher than the melting point of the polypropylene resin, it is gradually cooled to carry out the X-ray diffraction measurement of the laminated porous film in which then β crystal has been generated and grown. When a diffraction peak derived from a (300) plane of then β crystal of the polypropylene resin is detected in a range of 20 = 16.0° - 16.5°, it is judged that the laminated porous film has the β activity.

Regarding the detail of the β crystal structure of the polypropylene resin and the X-ray diffraction measurement, it is possible to refer to Macromol. Chem. 187,643-652 (1986), Prog. Polym. Sci. Vol. 16,361-404 (1991), Macromol. Symp. 89,499-511 (1995), Macromol. Chem. 75,134 (1964), and reference documents listed in these documents. The method of evaluating the β activity is shown in detail in the examples of the present invention to be described later.

0037 As a method of providing the laminated porous film for the separator with the β activity, it is possible to exemplify a method of not adding a substance for accelerating the generation of the α crystal of the polypropylene resin to the resin composition of the layer A, a method of adding polypropylene treated to generate a peroxide radical to the resin composition, as described in Patent No. 3739481, and a method of adding the β crystal nucleating agent to the resin composition of the layer A.

It is especially preferable to obtain the β activity by adding the β crystal nucleating agent to the resin composition of the layer A. By adding the β crystal nucleating agent to the resin composition of the layer A, it is possible to accelerate the generation of the β crystal of the polypropylene resin homogeneously and efficiently and obtain a separator for a lithium-ion battery having a porous layer having the β activity.

0038 The details of the components of the layers composing the laminated porous film of the first embodiment of the present invention are described below.

The laminated porous film of the first embodiment includes the layer A consisting of the porous layer containing the polypropylene resin as the main component thereof and the layer B consisting of the porous layer containing the polyethylene resin as the main component thereof. The laminated porous film has the P activity. The electric resistance of the laminated porous film at 25°C is not more than 10Ω. The electric resistance of the laminated porous film after it is heated at 135°C for 5 seconds is not less than 100Ω.

[Description of Layer A]

0039 Initially the layer A is described in detail below.

(Description of Polypropylene Resin)

As the polypropylene resin contained in the layer A, it is possible to exemplify random copolymers or block copolymers consisting of homo-propylene (propylene homopolymer) or propylene and $\alpha$-olefin such as ethylene, 1-butene, 1-pentene, 1-hexene, 1-heptene, 1-octene, 1-nonen or 1-decene. Of the above-described random copolymers or block copolymers, the homo-polypropylene is used more favorably from the standpoint of the mechanical strength of the laminated porous film.

0040 It is favorable to use the polypropylene resin having an isotactic structure pentad fraction (mmmm fraction) showing tacticity at 80 to 99%. It is more favorable to use the polypropylene resin having the isotactic structure pentad fraction at 83 to 98% and most favorable to use the polypropylene resin having the isotactic structure pentad fraction at 85 to 97%. When the isotactic structure pentad fraction is too low, there is a fear that the mechanical strength of the film becomes low. On the other hand, the upper limit of the isotactic structure pentad fraction is specified by the upper limit industrially currently obtained. But when a resin having a higher regularity is developed in the future, there is a possibility that the upper limit of the isotactic structure pentad fraction is altered.

The isotactic structure pentad fraction (mmmm fraction) means a three-dimensional structure in which all of 5 methyl groups which are side chains branched from a main chain consisting of a carbon-carbon bond composed of arbitrary continuous 5 propylene units are positioned in the same direction or a ratio thereof. The attribution of a signal in a methyl group region complies with A. Zambelli et al (Marcomolecules 8,687, (1975)).

0041 It is favorable that Mw/Mn which is a parameter showing the molecular-weight distribution of the polypropylene resin is 2.0 to 10.0. It is more favorable to use the polypropylene resin having the Mw/Mn of 2.0 to 8.0 and most favorable to use the polypropylene resin having the Mw/Mn of 2.0 to 6.0. The smaller the Mw/Mn is, the narrower the molecular-weight distribution is. When the Mw/Mn is less than 2.0, there occurs a problem that extrusion moldability is low, and in addition it is difficult to industrially produce the polypropylene resin. On the other hand, when the Mw/Mn exceeds 10.0, the amount of a low molecular-weight component becomes large. Thereby the mechanical strength of the laminated porous film is liable to deteriorate. The Mw/Mn is obtained by a GPC (gel permeation chromatography) method.

0042 Although the melt flow rate (MFR) of the polypropylene resin is not limited to a specific one, the melt flow rate (MFR) thereof is favorably 0.1 to 15g/10 minutes and more favorably 0.5 to 10g/10 minutes. When the MFR is less than 0.1g/10 minutes, the melt viscosity of the resin is high at a molding time and thus the productivity of the film deteriorates. On the other hand, when the MFR is more than 15g/10 minutes, the film has a low mechanical strength. Thus a problem is liable to occur in practical use. The MFR is measured in accordance with JIS K7210 in conditions where temperature is 230°C and a load is 2.16kg.

(Description of $\beta$ Activity)

0043 To provide the laminated porous film with the $\beta$ activity, in the present invention, substances shown below are used as the $\beta$ crystal nucleating agent. Provided that the generation and growth of the $\beta$ crystal is increased, the $\beta$ crystal nucleating agent is not limited to specific ones. Substances shown below may be used by mixing not less than two kinds thereof with each other.

As the $\beta$ crystal nucleating agent, the following substances are listed. The substances may be used in combination of not less than two kinds thereof.

As the $\beta$ crystal nucleating agent, it is possible to list amide compounds; tetraoxaspiro compounds; quinacridones; iron oxide having a nano-scale size; alkaline metal salts or alkaline earth metal salts of carboxylic acid represented by 1,2-potassium hydroxystearate, magnesium benzoate, magnesium succinate, and magnesium phthalate; aromatic sulfonic acid compounds represented by sodium benzensulfonate and sodium naphthalene sulfonate; diesters or triesters of dibasic or tribasic carboxylic acid; phthalocyanine-based pigments represented by phthalocyanine blue; two-component compounds composed of a component A which is an organic dibasic acid and a component B which is oxides, hydroxides or salts of the IIA group metals of the Periodic Table; and compositions consisting of a cyclic phosphorous compound and a magnesium compound.

0044 As examples of the $\beta$ crystal nucleating agent commercially available, it is possible to exemplify "Enujesuta-NU-100" produced by New Japan Chemical Co., Ltd. As examples of the polypropylene resin to which the $\beta$ crystal nucleating agent is added, it is possible to list polypropylene "Bepol B-022SP" produced by Aristech Inc., "Beta ($\beta$) - PP BE60-7032" produced by Borealis Inc., and polypropylene "BNX BETAPP-LN" produced by Mayzo Inc.

0045 It is necessary to appropriately adjust the mixing ratio of the $\beta$ crystal nucleating agent to be added to the polypropylene resin according to the kind of the $\beta$ crystal nucleating agent or the composition of the polypropylene resin. It is favorable to use 0.0001 to 5.0 parts by mass of the $\beta$ crystal nucleating agent, more favorable to use 0.001 to 3.0 parts by mass thereof, and most favorable to use 0.01 to 1.0 part by mass thereof for 100 parts by mass of the polypropylene resin. When the mixing ratio of the $\beta$ crystal nucleating agent is not less than 0.0001 parts by mass, it is possible to sufficiently generate and grow the $\beta$ crystal of the polypropylene resin at a production time and securely obtain the $\beta$ activity to a sufficient degree. Thereby the obtained laminated porous film is capable securely obtaining the $\beta$ activity to a sufficient degree, thus obtaining desired air-permeable performance. The addition of the $\beta$ crystal nucleating agent

not more than 5.0 parts by mass to 100 parts by mass of the polypropylene resin is economically advantageous and in addition, prevents the β crystal nucleating agent from bleeding to the surface of the film, which is preferable.

0046 It is important that the layer A contains the polypropylene resin as its main component. When the polypropylene resin and the β crystal nucleating agent are used, the total of the mass of the polypropylene resin and that of the β crystal nucleating agent is set to not less than 70 mass %, favorably not less than 80 mass %, and more favorably not less than 90 mass % for the whole mass of the layer A.

The layer A may contain additives or other components to be normally contained in the resin composition, provided that the mixing amount thereof is in a range in which they do not inhibit the above-described object of the present invention and the properties of the layer A. The additives are added to the resin to improve and adjust molding processability, productivity, and various properties of the laminated porous film. It is possible to list recycle resin which is generated from trimming loss such as a lug, inorganic particles such as silica, talc, kaolin, calcium carbonate, and the like, pigments such as titanium oxide, carbon black, and the like, a flame retardant, a weathering stabilizer, a heat stabilizer, an antistatic agent, a melt viscosity improving agent, a crosslinking agent, a lubricant, a nucleating agent, plasticizer, an age resistor, an antioxidant, a light stabilizer, an ultraviolet ray absorber, a neutralizing agent, an antifog agent, an anti-blocking agent, a slip agent, and a coloring agent. Specifically as the antioxidant, copper halide, amine-based antioxidants such as aromatic amine, and phenolic antioxidants such as triethylene glycol bis[3-(3-t-butyl-5-methyl-4-hydroxyphenyl)propionate. As an antioxidant commercially available, "Irganox B225" (produced by Chiba Specialty Chemicals, Inc.). In addition, additives commercially available, the ultraviolet ray absorber described on pages 178 through 182 of "Formulation for Plastics", a surface active agent serving as the antistatic agent described on pages 271 through 275 thereof, the lubricant described on pages 283 through 294 thereof.

[Description of Layer B]

0047 The layer B functioning as the shut-down layer is described below.

(Description of Polyethylene Resin)

0048 The layer B contains the polyethylene resin as its main component. The layer B may have any constructions, provided that it has a large number of pores intercommunicable with each other in the thickness direction thereof and is composed of a composition containing the polyethylene resin as its component, as described above. For example, the layer B may have a structure having the pores formed in a membrane material made of a polyethylene resin composition or may have a structure in which particulate or fibrous micro-substances aggregate to form a layer and gaps between the micro-substances form the pores. It is preferable that the layer B of the present invention has the former structure which allows uniform pores to be formed and the porosity and the like to be easily controlled.

0049 The thermal property of the polyethylene resin which is the main component of the composition composing the layer B is important. That is, it is necessary to so select the polyethylene resin that the crystal melting peak temperature of the composition composing the layer B is lower than that of the composition composing the layer A. Specifically, it is preferable that the layer B contains the polyethylene resin whose crystal melting peak temperature is not less than 100°C nor more than 150°C.

The crystal melting peak temperature is a peak value of the crystal melting temperature detected when the temperature of the layer B is increased from 25°C at a heating speed of 10°C/minute in accordance with JIS k7121 by using a differential scanning calorimeter.

0050 As the kind of the polyethylene resin, it is possible to list polyolefin resin such as ultra-low-density polyethylene, low-density polyethylene, linear low-density polyethylene, intermediate-density polyethylene, high-density polyethylene, and ultra-high-density polyethylene and in addition, an ethylene-propylene copolymer, and mixtures of the polyethylene resin and polyolefin resins. Of these polyethylene resins, it is preferable to use the polyolefin resin alone.

0051 The density of the polyethylene resin is set to favorably 0.910 to 0.970g/cm$^3$, more favorably o.930 to 0.970g/cm$^3$, and most favorably 0.940 to 0.970g/cm$^3$. When the density thereof is not less than 0.910g/cm$^3$, it is possible to form the layer A having a proper SD temperature, which is preferable. When the density is not more than 0.970g/cm$^3$, it is possible to form the laminated porous film having the layer B having a proper shut-down temperature, and in addition the stretchability of the polyethylene resin can be maintained, which is preferable. The density can be measured by using a density gradient tube method in accordance with JIS K7112.

0052 Although the melt flow rate (MFR) of the polyethylene is not specifically limited, the melt flow rate thereof is set to favorably 0.03 to 15g/10 minutes and more favorably 0.3 to 10g/10 minutes. When the MFR is not less than 0.03g/10 minutes, the melt viscosity of the resin is sufficiently low at a molding processing time and thus a high productivity can be obtained, which is preferable. When the MFR is not more than 15g/10 minutes, the melt viscosity thereof is close to that of the polypropylene resin. Thus it is possible to obtain an improved dispersibility and consequently a homogenous laminated porous film.

The MFR is measured in accordance with JIS K7210 in the condition where temperature is 190°C and a load is 2.16kg.

0053 The method of producing the polyethylene resin is not limited to a specific one, but it is possible to exemplify known polymerization method using a known olefin polymerization catalyst, for example, polymerization methods using a multi-site catalyst represented by a Ziegler-Natta type catalyst and a single-site catalyst represented by a Metallocene catalyst.

(Description of Compound (X))

0054 It is favorable that the layer B contains a substance which makes the layer B porous and accelerates the display of the SD property. Above all, it is more favorable that the layer B contains at least one compound (X) selected from among modified polyolefin resin, alicyclic saturated hydrocarbon resin or modified substances thereof, ethylene copolymers, and wax. By adding the compound (X) to the polyethylene resin, it is possible to obtain a porous structure more efficiently and easily control the configurations of pores and the diameter thereof.

0055 In the present invention, the modified polyolefin resin means resin containing polyolefin modified with unsaturated carboxylic acid, anhydrides thereof or a silane coupling agent as its main component. As the unsaturated carboxylic acid and the anhydrides thereof, acrylic acid, methacrylic acid, maleic acid, maleic anhydride, citraconic acid, citraconic anhydride, itaconic acid, itaconic anhydride, ester compounds of monoepoxy compounds of derivatives of these acids and these acids, and reaction products of these acids and polymers having groups capable of reacting with these acids are listed. It is also possible to use metal salts of these substances. The maleic anhydride is used more favorably than these substances. It is possible to use copolymers of these polymers singly or by mixing not less than two kinds thereof with each other. 0056 As the silane coupling agent, it is possible to list vinyl triethoxysilane, methacry-loyloxytrimethoxysilane, and $\gamma$-methacryloyloxypropyltriacetyloxysilane.

0057 To produce the modified polyethylene resin, for example, it is possible to copolymerize these monomers for modification with a polymer at the stage of polymerizing the polymer or graft-copolymerize the polymerized polymer with these monomers for modification. One or a plurality of the monomers for modification is used to modify the polyolefin resin. Modified polyethylene resins having not less than 0.1 mass % nor more than 5 mass % are preferably used. Of these modified polyethylene resins, graft-modified ones are preferably used.

0058 As the modified polyolefin resins commercially available, "ADMER" (produced by Mitsui Chemicals, Inc.) and "Modick" (produced by Mitsubishi Chemical Corporation) are exemplified.

0059 As the alicyclic saturated hydrocarbon resin and modified substances thereof, petroleum resin, rosin resin, terpene resin, coumarone resin, indene resin, coumarone-indene resin, and modified substances thereof.

0060 In the present invention, the petroleum resin means aliphatic, aromatic, and copolymerization petroleum resins to be obtained by homo-polymerization or copolymerization of one or not less than two kinds of aliphatic olefins or olefins, having C4 to C10, which are obtained from side products resulting from thermal decomposition of naphtha or aromatic compounds having not less than C8 and olefinically unsaturated bond.

0061 The petroleum resin includes the aliphatic petroleum resin whose main raw material is C5 fraction, the aromatic petroleum resin whose main raw material is C9 fraction, and the copolymerization petroleum resin of the aliphatic petroleum resin and the aromatic petroleum resin, and alicyclic petroleum resin. As the terpene resin, it is possible to exemplify terpene resin and terpene-phenol resin to be obtained from $\beta$-pinene. As the rosin resin, it is possible to exemplify rosin resin such as gum rosin, wood rosin, and the like and esterified rosin resin modified with glycerin or pentaerythritol. When alicyclic saturated hydrocarbon resin and modified substances thereof are mixed with the polyethylene resin, they show a comparatively favorable compatibility with the polyethylene resin. The petroleum resin is more favorable from the standpoint of color and thermal stability. To use the hydrogenated petroleum resin is more favorable.

0062 The hydrogenated petroleum resin is obtained by hydrogenating the petroleum resin by conventional methods. For example, hydrogenated aliphatic petroleum resin, hydrogenated aromatic petroleum resin, hydrogenated copolymerization petroleum resin, hydrogenated alicyclic petroleum resin, and hydrogenated terpene resin are listed. Of the hydrogenated petroleum resin, the hydrogenated alicyclic petroleum resin obtained by copolymerizing a cyclopentadiene compound and an aromatic vinyl compound with each other is especially preferable. As the hydrogenated petroleum resin commercially available, "Archon" (produced by Arakawa Chemical Industries, Ltd.) is exemplified.

0063 In the present invention, the ethylene copolymers mean compounds obtained by copolymerizing ethylene with not less than one kind selected from among vinyl acetate, unsaturated carboxylic acid, unsaturated carboxylic acid anhydride, and carboxylic acid ester.

0064 In the ethylene copolymer, the content ratio of an ethylene monomer unit is favorably not less than 50 parts by mass, more favorably not less than 60 parts by mass, and most favorably not less than 65 parts by mass. As the upper limit of the content ratio of the ethylene monomer unit is favorably not more than 95 parts by mass, more favorably not more than 90 parts by mass, and most favorably not more than 85 parts by mass. When the content ratio of the ethylene monomer unit is within the predetermined range, it is possible to form the porous structure more efficiently.

0065 The ethylene copolymer having the MFR (JIS K7210, temperature: 190°C, load: 2.16kg) not less than 0.1g/10 minutes nor more than 10g/10 minutes is preferably used. When the MFR is more than 0.1g/10 minutes, extrusion processability can be favorably maintained. When the MFR is less than 10g/10 minutes, the strength of the film is unlikely to deteriorate, which is preferable.

0066 The ethylene copolymers shown below can be commercially obtained. As an ethylene-vinyl acetate copolymer, "EVAFLEX" (produced by Dupont-Mitsui Polychemicals Co., Ltd.) and "Novatec EVA" (produced by Japan Polyethylene Corporation) are exemplified. As an ethylene-acrylic acid copolymer, "NUC copolymer" (produced by Nippon Unicar Co., Ltd.), "EVAFLEX-EAA" (produced by Dupont-Mitsui Polychemicals Co., Ltd.), and "REXPEARL EAA" (produced by Japan Ethylene Corporation) are exemplified. As an ethylene-(metha)acrylate copolymer, "ELVALOY" (produced by Dupont-Mitsui Polychemicals Co., Ltd.) and "REXPEARL EMA" (produced by Japan Ethylene Corporation) are exemplified. As an ethylene-ethyl acrylate, "REXPEARL EEA" (produced by Japan Ethylene Corporation) is exemplified. As an ethylene-methyl(metha)acrylate copolymer, "Acryft" (produced by Sumitomo Chemical Co., Ltd.) is exemplified. As an ethylene-vinyl acetate-maleic anhydride terpolymer, "Bondine" (produced by Sumitomo Chemical Co., Ltd.) is exemplified. As an ethylene-glycidyl methacrylate copolymer, an ethylene-vinyl acetate-glycidyl methacrylate terpolymer, and ethyl-ethyl acrylate-glycidyl methacrylate terpolymer, "Bondfast" (produced by Sumitomo Chemical Co., Ltd.) is exemplified.

0067 In the present invention, the wax is organic compounds satisfying the properties of the following (a) and (b).

(a) Melting point is 40°C to 200°C.
(b) Melt viscosity at temperature higher than the melting point by 10°C is not more than 50 Pa·s.

0068 The wax includes polar wax or non-polar wax, polypropylene wax, polyethylene wax, and wax modifier. More specifically the polar wax, the non-polar wax, Fischer-Tropsh wax, oxidized Fischer-Tropsh wax, hydroxystearamide wax, functionalized wax, the polypropylene wax, the polyethylene wax, the wax modifier, amorphous wax, carnauba wax, caster-oil wax, microcrystalline wax, beeswax, castor wax, vegetable wax, candelilla wax, Japan wax, ouricury wax, douglas-fir bark wax, rice bran wax, jojoba wax, bayberry wax, montan wax, ozokerite wax, ceresin wax, petroleum wax, paraffin wax, chemically modified hydrocarbon wax, substituted amide wax, combinations of these wax, and derivatives thereof. Of these waxes, the paraffin wax, the polyethylene wax, and the microcrystalline wax are favorable because these waxes allow the porous structure to be formed efficiently. The microcrystalline wax is more favorable because it allows pore diameters to be small, which is preferable to efficiently work the SD property. As the polyethylene wax commercially available, "FT-115" (produced by Nippon Seiro Co., Ltd.) is exemplified. As the microcrystalline wax, "Hi-Mic" (produced by Nippon Seiro Co., Ltd.) is exemplified.

0069 As the compounds (X) which allow the SD property to work more efficiently, the alicyclic saturated hydrocarbon resin or the modified substances thereof, the ethylene copolymers, and the wax are favorable. The wax is more favorable from the standpoint of moldability.

0070 In forming pores by peeling the interface of the polyethylene resin and the compound (X), the mixing amount of the compound (X) for 100 parts by mass of the polyethylene resin contained in the layer B is favorably not less than 1 part by mass, more favorably not less than 5 parts by mass, and most favorably not less than 10 parts by mass. On the other hand, as the upper limit of the mixing amount of the compound (x), the mixing amount thereof is favorably not more than 50 parts by mass, more favorably not more than 40 parts by mass, and most favorably not more than 30 parts by mass. By setting the mixing amount of the compound (X) for 100 parts by mass of the polyethylene resin to not less than 1 part by mass, it is possible to obtain a sufficient effect of forming a desired favorable porous structure. By setting the mixing amount of the compound (X) for 100 parts by mass of the polyethylene resin to not more than 50 parts by mass, it is possible to secure a more stable moldability.

0071 In the layer B, in addition to the polyethylene resin and the compound (X) for accelerating the formation of pores, thermoplastic resin may be used in a range where the thermal property of the laminated porous film, specifically the SD property is not inhibited. As other thermoplastic resins which can be mixed with the polyethylene resin, styrene resin such as styrene, AS resin, ABS resin, and PMMA resin; ester resin such as polyvinyl chloride resin, fluorine resin, polyethylene terephthalate, polybutylene terephthalate, polycarbonate, and polyarylate; ether resin such as polyacetal, polyphenylene ether, polysulfone, polyether sulfone, polyether ether ketone, and polyphenylene sulfide; and polyamide resin such as nylon 6, nylon 6-6, and nylon 6-12 are listed.

0072 The layer B may contain a rubber component such as a thermoplastic elastomer as necessary. As the thermoplastic elastomer, it is possible to list styrene butadiene, polyolefin, urethane, polyester, polyamide, 1,2-polybutadiene, polyvinyl chloride, and ionomer thermoplastic elastomers.

0073 In addition to the polyethylene resin and the compound (X) accelerating the formation of pores, the layer B may contain additives or other components to be normally contained in the resin composition. The additives are used for the layer B to improve and adjust molding processability, productivity, and various properties of the laminated porous film. It is possible to list recycle resin generated from trimming loss such as a lug, inorganic particles such as silica, talc, kaolin, calcium carbonate, and the like, pigments such as titanium oxide, carbon black, and the like, a flame retardant, a weathering stabilizer, a heat stabilizer, an antistatic agent, a melt viscosity improving agent, a crosslinking agent, a lubricant, a nucleating agent, a plasticizer, an age resistor, an antioxidant, a light stabilizer, an ultraviolet ray absorber, a neutralizing agent, an antifog agent, an anti-blocking agent, a slip agent, and a coloring agent.

Of the above-described additives, the nucleating agent is preferable because it has the effect of controlling the crystal structure of the polyethylene resin and making the porous structure fine when the layer B is stretched to form pores. As examples of the additives commercially available, "GEL ALL D" (produced by New Japan Science Ltd.), "ADK STAB" (produced by Asahi Denka Co., Ltd.), "Hyperform" (produced by Milliken & Company), and "IRGACLEAR D" (produced by Chiba Specialty Chemicals, Inc.) are listed. As an example of the polyethylene resin to which the nucleating agent is added, "RIKEMASTER CN" (produced by Riken Vitamin Co., Ltd.) is exemplified.

[Description of Laminated Construction]

0074 The laminated construction of the laminated porous film of the present invention is described below.

The laminated construction is not limited to a specific one, provided that the layer A and the layer B constructing the basic construction of the laminated porous film are present. The simplest laminated construction is a two-layer construction consisting of the layer A and the layer B. The second simplest laminated construction is a two-kind three-layer construction consisting of two outer layers and an intermediate layer. These two constructions are preferable. In the case of the two-kind three-layer construction, the layer A/the layer B/the layer A and the layer B/the layer A/the layer B can be adopted. If necessary, it is possible to form a three-kind three-layer construction by combining a layer having other function with the layer A and the layer B. It is also possible to increase the number of layers if necessary. For example, four-layer, five-layer, six-layer, and seven-layer constructions can be adopted. When resin starts to flow at high temperatures, there is a possibility that the resin is sucked into a porous structure of a negative electrode. Thus it is preferable to select the layer A containing the polypropylene resin as its main component as the outer layer.

The ratio of the thickness of the layer A to that of the layer B is set to favorably 0.05 to 20, more favorably 0.1 to 15, and most favorably 0.5 to 12. By setting the value of the layer A/the layer B to not less 0.05, the layer A is capable of sufficiently displaying the BD property and strength. By setting the value of the layer A/the layer B to not more than 20, when the laminated porous film is applied to a battery, the SD property can be sufficiently displayed and thus the safety of the battery can be ensured. When layers other than the layer A and the layer B are formed, the ratio of the total of the thicknesses of the other layers to the entire thickness of the laminated porous film is favorably 0.05 to 0.5 and more favorably 0.1 to 0.3, supposing that the entire thickness of the laminated porous film is 1.

[Description of Configuration and Property of Laminated Porous Film]

0075 Although the shape of the laminated porous film may be flat or tubular, the flat shape is more favorable than the tubular shape because the former allows several products to be obtained widthwise from one sheet. Therefore the former provides a high productivity and allows the inner surface of the sheet to be coated.

The thickness of the laminated porous film of the present invention is favorably not more than 50$\mu$m, more favorably not more than 40$\mu$m, and most favorably not more than 30$\mu$m. On the other hand, as the lower limit of the thickness thereof, the thickness thereof is not less than 5$\mu$m, more favorably not less than 10$\mu$m, and most favorably not less than 15$\mu$m. In using the laminated porous film as the separator for the battery, when the thickness of the laminated porous film is not more than 50$\mu$m, it is possible to set the electric resistance of the laminated porous film low, which ensures a sufficient performance of the battery. When the thickness thereof is not less than 5$\mu$m, the battery is capable of obtaining a substantially necessary electrical insulating performance. Thus when a high voltage is applied to the battery, short-circuit is unlikely to occur and the battery is excellent in safety.

0076 The properties of the laminated porous film of the present invention can be freely adjusted according to the composition of the layer A or that of layer B, the number of layers, the ratio among the thicknesses of layers to be layered, the combination of the layers A and B and other layers having properties other than those of the layers A and B, and a production method.

As the lower limit of the SD temperature of the laminated porous film of the present invention, the SD temperature thereof is favorably not less than 100°C, more favorably not less than 110°C, and most favorably not less than 120°C. On the other hand, as the lower limit of the SD temperature thereof, the SD temperature thereof is not more than 140°C. Supposing that the SD property is displayed at not more than 100°C, when the laminated porous film of the present invention is used as the separator for the battery and when the battery is left in a car in summer, there is a possibility that the temperature of the battery becomes close to 100°C in dependence on a place. It is unpreferable that the battery does not function in this state. On the other hand, when the SD temperature of the laminated porous film is higher than 140°C, the SD temperatures in this range is insufficient for the safety of the battery.

As means for adjusting the SD temperature, it is effective to use a means for selecting thermoplastic resin having the crystal melting peak temperature close to the desired SD temperature as the thermoplastic resin to be contained in the layer B and a means for increasing the thickness ratio of the layer B.

0077 As one of the characteristics of the laminated porous film of the present invention, the laminated porous film generates the BD property at not less than 160°C. That is, the BD temperature of the laminated porous film of the present invention is not less than 160°C, favorably 180°C, and more favorably 200°C. When the BD temperature is less than 160°C, there is no difference between the SD temperature and the BD temperature. For example, when the laminated porous film of the present invention is used as the separator for the battery, the battery is incapable of obtaining ensured safety. Although there is no restriction at a high-temperature side of the BD temperature, it is preferable that the BD temperature is not more than 300°C.

As a means for adjusting the BD temperature, a means for increasing the thickness ratio of the layer A is effective.

(Electric Resistance at 25°C)

0078 The electric resistance of the laminated porous film of the first embodiment of the present invention at 25°C is required to be not more than 10Ω, favorably not more than 5.0Ω, and more favorably not more than 3.0Ω. By setting the electric resistance of the laminated porous film to not more than 10Ω, when the laminated porous film is used as the separator for the battery, the battery is capable of having sufficiently excellent performance when the battery is used at a room temperature.

That the electric resistance of the laminated porous film at 25°C is low means that when the laminated porous film is used as the separator for the battery, an electric charge is capable of moving easily and thus the battery has excellent performance, which is preferable. Although the lower limit of the electric resistance thereof is not limited to a specific value, the electric resistance thereof is favorably not less than 0.1Ω, more favorably not less than 0.5Ω, and most favorably not less than 1.0Ω. When the electric resistance thereof at 25°C is not less than 0.1Ω, the laminated porous film is capable of preventing trouble such as an internal short circuit from occurring when the laminated porous film is used as the separator for the battery.

(Electric Resistance after Heating at 135°C for 5 Seconds)

0079 It is important that the laminated porous film of the present invention displays the SD property when it is used as the separator for the battery. Thus it is necessary that the electric resistance of the laminated porous film of the first embodiment after the laminated porous film is heated at 135°C for 5 seconds is not less than 100Ω, favorably not less than 200Ω, and more favorably not less than 1000Ω. By setting the electric resistance of the laminated porous film after the laminated porous film is heated at 135°C for 5 seconds to not less than 100Ω, pores close rapidly when an abnormal heat generation occurs. Thereby it is possible to avoid trouble of the battery such as rupture from occurring.

To set the electric resistance of the laminated porous film after the laminated porous film is heated at 135°C for 5 seconds to not less than 100Ω, it is necessary to appropriately adjust the pore diameter and the porosity. For example, it is possible to control the electric resistance of the laminated porous film after the laminated porous film is heated at 135°C for 5 seconds by adding the compound (X) to the polyethylene resin and adjusting the kind and mixing amount thereof or by adding the nucleating agent to the polyethylene resin to make the crystal of the polyethylene resin very fine, although operations for obtaining the above-described electric resistance value are not limited to those described above.

In the production method, by adjusting the stretching condition, it is possible to set the electric resistance of the laminated porous film after the laminated porous film is heated at 135°C for 5 seconds to not less than 100Ω.

On the other hand, although the upper limit of the electric resistance of the laminated porous film is not limited to a specific one, it is preferable that the electric resistance is not more than 100000Ω.

0080 In the laminated porous film of the present invention, the porosity is an important factor for specifying the porous structure and is a numerical value indicating the ratio of a space portion in the film. The porosity of the laminated porous film of the present invention is favorably not less than 5%, more favorably not less than 20%, most favorably not less than 30%, and especially favorably not less than 40%. On the other hand, as the upper limit of the porosity, the porosity is favorably not more than 80%, more favorably not more than 70%, most favorably not more than 65%. When the porosity is more than 5%, the laminated porous film securely obtains sufficient intercommunicable performance and is thus excellent in its air-permeable property. When the porosity is less than 80%, the laminated porous film is capable of sufficiently holding its sufficient mechanical strength, which is preferable from the standpoint of handling.

0081 It is preferable that the laminated porous film of the present invention has a small anisotropy from the standpoint of the property thereof. The anisotropy can be expressed by the ratio of a MD tensile strength to a TD tensile strength or the ratio of a MD tear strength MD to a TD tear strength. MD denotes a film pick-up (flow) direction. TD denotes a direction perpendicular to the MD.

Taking the tensile strength as an example, the ratio of "the MD tensile strength to the TD tensile strength" is favorably not less than 0.3, more favorably not less than 0.5, and most favorably not less than 1.0. As the upper limit of the ratio of "the MD tensile strength to the TD tensile strength", the ratio is favorably not more than 15, more favorably not more than 10, and most favorably not more than 8. By setting the value of the ratio of "the MD tensile strength to the TD tensile strength" to the specified range, in addition to favorable handling, the obtained film has a favorable physical balance and has a small anisotropy in its porous structure.

The MD tensile strength is set to favorably not less than 25 MPa, more favorably not less than 30 MPa, and most favorably not less than 40 MPa. When the film has the MD tensile strength more than 25 MPa, the film has a sufficient strength in handling it. Although the upper limit value of the MD tensile strength is not set to a specific value, preferably, the upper limit value thereof is so set that the balance between the MD tensile strength and the TD tensile strength is not out of the above-described range.

The TD tensile strength is set to favorably not less than 25 MPa, more favorably not less than 30 MPa, and most favorably not less than 40 MPa. When the film has the TD tensile strength more than 25 MPa, the film has a sufficient strength in handling it. Although the upper limit value of the TD tensile strength is not set to a specific value, preferably, the upper limit value thereof is so set that the balance between the MD tensile strength and the TD tensile strength is not out of the above-described range.

The tensile strength is measured by the method described in the examples.

0082 It is preferable to biaxially stretch the laminated porous film of the present invention. Biaxial stretching of the laminated porous film makes anisotropy small. Thereby it is possible to obtain the laminated porous film which can be handled easily and has physical properties balanced favorably.

0083 Other properties of the laminated porous film of the present invention can be also freely adjusted according to the compositions of the resin compositions composing the layers A and B, the construction of the layers, and the production method.

[Description of Production Method]

0084 The method of producing the laminated porous film of the present invention is described below. The present invention is not limited to the laminated porous film produced by the production method described below.

The method of producing the laminated porous film of the present invention is classified into the following three methods according to the order in making the laminated porous film porous and the order in layering the layers.

(a) A method of forming a porous film (hereinafter referred to as "porous film PP") of the layer A containing the polypropylene resin as its main component and a porous film (hereinafter referred to as "porous film SD") of the layer B containing the polyethylene resin as its main component and layering at least the porous film PP and the porous film SD one upon another.

(b) A method of forming a laminated membrane material composed of at least two layers consisting of a membrane material (hereinafter referred to as "unporous membrane material PP") containing the polypropylene resin as its main component and a membrane material (hereinafter referred to as "unporous membrane material SD") containing the polyethylene resin as its main component and making the laminated unporous membrane material porous.

(c) After making any one of the layer A containing the polypropylene resin as its main component and the layer B containing the polyethylene resin as its main component porous, the porous layer A and the unporous membrane material B are layered one upon another or the unporous layer A and the porous membrane material B are layered one upon another. Thereafter the unporous membrane material A or B is made porous.

0085 As the method (a), it is possible to exemplify a method of laminating the porous film PP and the porous film SD one upon another and a method of layering the porous film PP and the porous film SD one upon another with an adhesive agent.

As the method (b), it is possible to exemplify a method of forming the unporous membrane material PP and the unporous membrane material SD, and thereafter layering the unporous membrane material PP and the unporous membrane material SD one upon another by lamination or with an adhesive agent, and thereafter making both unporous membrane materials porous. Alternatively it is possible to exemplify a method of forming the laminated unporous membrane material by carrying out co-extrusion, and thereafter making the unporous membrane material porous.

As the method (c), it is possible to exemplify a method of laminating the porous film PP and the unporous membrane material SD one upon another or laminating the unporous membrane material PP and the porous film SD one upon another and a method of layering the porous film PP and the unporous membrane material SD one upon another or layering the unporous membrane material PP and the porous film SD one upon another with an adhesive agent.

In the present invention, the method (b) is favorable and the method of using the co-extrusion is more favorable from the standpoint of the simplicity of production steps thereof and the high productivity thereof.

0086 Separately from the above-described classification, the method of producing the laminated porous film of the present invention can be also classified by the method of making the layer B porous.

That is, when the layer A has the Ω activity, pores can be easily formed by stretching the layer A. As the method of making the layer B porous, it is possible to use known methods such as a stretching method, a phase separation method, an extraction method, a chemical treatment method, an irradiation etching method, a foaming method, and methods to be carried out in combination of these techniques. In the present invention, it is preferable to use the stretching method.

0087 The stretching method means a method of forming the unporous layer or the unporous membrane material by using a composition composed of resin and a compound added thereto and peeling the interface of the resin and the compound by stretching the unporous layer or the unporous membrane material to form pores.

In the phase separation method also called a conversion method or a micro-phase separation method, the pores are formed based on a phase separation phenomenon of a solution of a high polymer molecule. Specifically the phase separation method is classified into (a) a method of forming the pores by the phase separation of the high polymer molecule and (b) a method of making the layer B porous while the pores are being formed at a polymerization time. The former method is classified into a solvent gel method using a solvent and a thermal melting rapid solidification method. Both methods can be used.

0088 In the extraction method, an additive removable in a post process is mixed with the thermoplastic resin composition composing the layer B to form the unporous layer or the unporous membrane material. Thereafter the additive is extracted with a chemical to form the pores. As the additive, a polymeric additive, an organic additive, and an inorganic additive are listed.

As an example of the extraction method in which the polymeric additive is used, it is possible to exemplify a method of forming the unporous layer or the unporous membrane material by using two kinds of polymers different from each other in the solubility in an organic solvent and immersing the unporous layer or the unporous membrane material in the organic solvent in which one of the two kinds of polymers dissolves to extract one of the two kinds of polymers. More specifically it is possible to exemplify a method of forming the unporous layer or the unporous membrane material consisting of polyvinyl alcohol and polyvinyl acetate and extracting the polyvinyl acetate by using acetone and n-hexane, and a method of containing a hydrophilic polymer in a block copolymer or a graft copolymer to form the unporous layer or the unporous membrane material and removing the hydrophilic polymer by using water.

0089 As an example of the extraction method in which the organic additive is used, it is possible to exemplify a method of adding a substance to an organic solvent in which the substance is soluble but the thermoplastic resin composing the layer B is insoluble to form the unporous layer or the unporous membrane material and immersing the unporous layer or the unporous membrane material in the organic solvent to remove the substance by extraction.

As the above-described substance, it is possible to list higher aliphatic alcohol such as stearyl alcohol and ceryl alcohol; n-alkanes such as n-decane and n-dodecane; paraffin wax; liquid paraffin; and kerosene. These substances can be extracted with the organic solvent such as isopropanol, ethanol, and hexane. As the above-described substance, water-soluble substances such as sucrose, sugar, and the like are listed. Because these water-soluble substances can be extracted with water, they impose burden on environment to a low extent.

0090 In the chemical treatment method, pores are formed by chemically cutting bonds at a portion of a polymeric substrate or performing a bonding reaction. More specifically, methods of forming pores by performing chemical treatment such as redox treatment, alkali treatment, and acid treatment are exemplified.

In the irradiation etching method, pores are formed by irradiating the polymeric substrate with neutron rays or laser.

In the fusion method, fine polymer powder such as powder of polytetrafluoroethylene, polyethylene or polypropylene is sintered after molding finishes.

As the foaming method, a mechanical foaming method, a physical foaming method, and a chemical foaming method are known. In the present invention, any of the above-described methods can be used.

0091 As a favorable form of producing the laminated porous film of the present invention, it is possible to exemplify a method of forming the laminated unporous membrane material composed at least two layers, namely, the layer A and the layer B by using the resin composition, containing the polypropylene resin as its main component, which has the β activity and the resin composition containing the polypropylene resin as its main component and the compound (X) and stretching the laminated unporous membrane material to form a large number of pores intercommunicable with each other in the thickness direction thereof.

0092 The method of producing the laminated unporous membrane material is not limited to a specific method, but known methods may be used. It is possible to exemplify a method of fusing the thermoplastic resin composition by using an extruder, co-extruding it from a T die, and cooling it with a cast roll to solidify it. It is also possible to use a method of cutting open a film produced by using a tubular method to make it planar.

The method of stretching the laminated unporous membrane material includes a roll stretching method, a rolling process, a tenter stretching method, and a simultaneous biaxial stretching method. Biaxial stretching is performed by using one of the above-described methods or in combination of not less than two of the above-described methods. The biaxial stretching is favorable from the standpoint of the control of the porous structure.

0093 As a more favorable form, description is made below on a method of producing the laminated porous film having a two-kind three-layer construction by performing a T die co-extrusion by using the resin composition, containing the polypropylene resin as its main component and having the β activity, which composes the layer A and the resin composition, containing the polypropylene resin as its main component and the compound (X), which composes the layer B and biaxially stretching the obtained laminated unporous membrane material to form the laminated porous film.

0094 It is preferable that the resin composition composing the layer A contains at least the polypropylene resin and the β crystal nucleating agent. It is preferable to mix these components with each other with a Henschel mixer, a super mixer or a tumbler-type mixer. Alternatively all components are put in a bag and mixed with each other by hand. Thereafter the components are fused and kneaded with a uniaxial extruder, a twin screw extruder or a kneader to pelletize the components. It is preferable to use the twin screw extruder.

0095 In forming the resin composition composing the layer B, the components thereof including the polyethylene resin, the compound (X), and desired additives shown in the description of the layer B are mixed with one another with the Henschel mixer, the super mixer or the tumbler-type mixer. Thereafter the components are fused and kneaded with the uniaxial extruder, the twin screw extruder or the kneader to pelletize the components. It is preferable to use the twin screw extruder.

0096 The pellet of the resin composition for the layer A and the pellet of the resin composition for the layer B are supplied to the extruder to extrude them from a co-extrusion mouthpiece of a T die. As the kind of the T die to be used, both a two-kind three-layer multi-manifold type and a two-kind three-layer feed block type can be used.

Although the gap of the T die to be used is determined according to an ultimately necessary thickness of a film, a stretching condition, a draft ratio, and various conditions, the gap of the T die is set to normally 0.1 to 3.0mm and favorably 0.5 to 1.0mm. It is unpreferable to set the gap of the T die to less than 0.1mm from the standpoint of a production speed. When the gap of the T die is more than 3.0mm, the draft ratio becomes large, which is not preferable from the standpoint of stability in the production of the film.

0097 Although the extrusion processing temperature in the extrusion molding is appropriately adjusted according to the flow property of the resin composition and the moldability thereof, the extrusion processing temperature is set to favorably 150 to 300°C and more favorably 180 to 280°C. When the extrusion processing temperature is more than 150°C, the fused resin has a sufficiently low viscosity and thus an excellent moldability is obtained, which is preferable. When the extrusion processing temperature is less than 300°C, it is possible to restrain the resin composition from deteriorating.

The temperature at which the membrane material is cooled to solidify it is very important in the present invention. At temperatures shown below, the β crystal in the unstretched membrane material is generated and grown, and the ratio of the β crystal in the membrane material can be adjusted. The temperature at which the membrane material is cooled to solidify it by means of the cast roll is set to favorably 80 to 150°C, more favorably 90 to 140°C, and most favorably 100 to 130°C. By setting the temperature at which the membrane material is cooled to solidify it to not less than 80°C, the ratio of the β crystal in the membrane material solidified by cooling it can be sufficiently increased, which is preferable. By setting the temperature at which the membrane material is cooled to solidify it to not more than 150°C, it is possible to prevent the occurrence of trouble that extruded fused resin adheres to the cast roll and sticks to it and thus efficiently process the resin composition into the membrane material, which is preferable.

0098 By setting the temperature of the cast roll to the above-described temperature range, it is favorable to adjust the ratio of the β crystal of the unstretched membrane material to 30 to 100%. The ratio of the β crystal is set to more favorably 40 to 100%, most favorably 50 to 100%, and especially favorably 60 to 100%. By setting the ratio of the P crystal of the unstretched membrane material to not less than 30%, it is easy to make the membrane material porous by a stretching operation to be performed at a subsequent production step. Thereby it is possible to obtain the porous film having an excellent electrical property and the β activity.

The ratio of the β crystal is computed based on the following equation by using a crystal melting heat amount (ΔHmα) derived from the α crystal of the polypropylene and the crystal melting heat amount (ΔHmβ) derived from the β crystal detected, when the temperature of the membrane material is raised from 25°C to 240°C at a heating speed of 10°C/minute by using the differential scanning calorimeter.

$$\texttt{Ratio of β crystal (\%) = [ΔHmβ/(ΔHmβ + ΔHmα)] × 100}$$

0099 Thereafter the obtained laminated unporous membrane material is biaxially stretched. Simultaneous biaxial stretching or sequential biaxial stretching is performed. In forming the laminated porous film superior in its SD property intended by the present invention, it is possible to select a stretching condition at each stretching step. In the present invention, the sequential biaxial stretching capable of easily controlling the porous structure is preferable. Stretching in a membrane material pick-up direction (MD) (flow direction) is called "vertical stretching", whereas stretching in a direction (TD) perpendicular to the pick-up direction is called "horizontal stretching".

0100 In using the sequential biaxial stretching, although it is necessary to select a stretching temperature according to the composition of a resin composition to be used, the crystal melting peak temperature, and a crystallization degree, the sequential biaxial stretching allows the control of the porous structure to be easy and the balance between the mechanical strength and other physical properties such as shrinkage factor to be easily taken. The stretching temperature in the vertical stretching is set to 20 to 130°C, favorably 40 to 120°C, and more favorably 60 to 110°C. The magnification in the vertical stretching is set to favorably 2 to 10 times, more favorably 3 to 8 times, and most favorably 4 to 7 times. By performing the vertical stretching in the above-described range, it is possible to prevent the film from being broken at a stretching time and generate a proper starting point of pores. The stretching temperature in the horizontal stretching is set to 100 to 160°C, favorably 110 to 150°C, and more favorably 120 to 140°C. The magnification in the horizontal stretching is set to favorably 2 to 10 times, more favorably 3 to 8 times, and most favorably 4 to 7 times. By performing the horizontal stretching in the above-described range, it is possible to moderately enlarge the starting point of pores formed by the vertical stretching and generate a fine porous structure. The stretching speed at the stretching step is set to favorably 500 to 12000%/minute, more favorably 1500 to 10000%/minute, and most favorably 2500 to 8000%/minute.

0101 The laminated porous film obtained in the above-described procedure is heat-treated at favorably 100 to 150°C and more favorably at 110 to 140°C to improve the dimensional stability thereof. Relaxation treatment may be performed at a rate of 1 to 30% during the heat treatment step as necessary. By uniformly cooling the laminated porous film after the heat treatment is carried out and winding it on a roll or the like, the laminated porous film of the present invention is obtained.

[Description of Separator for Battery]

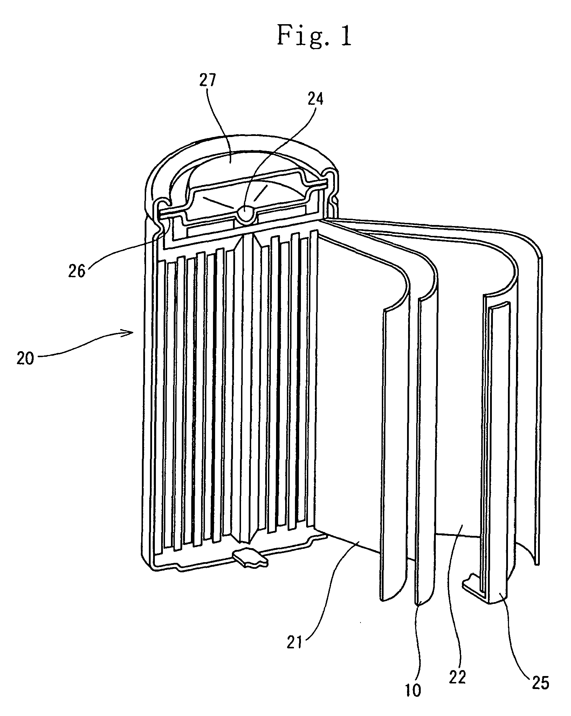

0102 A nonaqueous electrolyte battery accommodating the laminated porous film of the present invention as its separator is described below with reference to Fig. 1.

Both a positive plate 21 and a negative plate 22 are spirally wound by overlapping the positive plate 21 and the negative plate 22 on each other via a separator 10. The outer sides of the positive plate 21 and the negative plate 22 are fixed with a tape to integrate the wound the positive plate 21, the negative plate 22, and the separator 10 with one another. In spirally winding them, the thickness of the separator 10 is set to favorably 5 to 40$\mu$m and especially favorably 5 to 30$\mu$m. By setting the thickness of the separator 10 to not less than 5$\mu$m, the separator 10 is resistant to tear. By setting the thickness of the separator 10 to not more than 40$\mu$m, it is possible to increase the area of the battery in accommodating the wound separator 10 in a predetermined battery can and increase the capacity of the battery.

0103 The positive plate 21, the separator 10, and the negative plate 22 integrally wound is accommodated inside a bottomed cylindrical battery case and welded to a positive lead 24 and a negative lead 25 respectively. Thereafter the electrolyte is injected to the battery can. After the electrolyte penetrates into the separator 10 sufficiently, the periphery of the opening of the battery can is sealed with a positive lid 27 via a gasket 26. Thereafter preparatory charge and aging are carried out to produce the cylindrical nonaqueous electrolyte battery.

0104 A lithium salt is dissolved in an organic solvent to obtain the electrolyte. Although the organic solvent is not limited to a specific one, the following substances are used: esters such as propylene carbonate, ethylene carbonate, butylene carbonate, $\gamma$-butyrolactone, $\gamma$-valerolactone, dimethyl carbonate, methyl propionate, and butyl acetate; nitriles such as acetonitrile; ethers such as 1,2-dimethoxyethane, 1,2-dimethoxymethane, dimethoxypropane, 1,3-dioxolane, tetrahydrofuran, 2-methyltetrahydrofuran, and 4-methyl-1,3-dioxofuran; and sulfolane. These organic solvents can be used singly or in combination of not less than two kinds thereof.

It is preferable to use an electrolyte in which 1.4 mol/L of lithium phosphate hexafluoride (LiPF$_6$) is dissolved in a solvent containing two parts by mass of the methyl ethyl carbonate mixed with one part by mass of the ethylene carbonate.

0105 As the negative electrode, an alkali metal or a compound containing the alkali metal integrated with a current collector such as a net made of stainless steel is used. As the alkali metal, lithium, sodium or potassium is used. As the compound containing the alkali metal, alloys of the alkali metal and aluminum, lead, indium, potassium, cadmium, tin or magnesium; compounds of the alkali metal and a carbon material; and compounds of the alkali metal having a low electric potential and metal oxides or sulfides are listed.

In using the carbon material for the negative electrode, it is possible to use those capable of doping or de-doping lithium ions. For example, it is possible to use graphite, pyrolytically decomposed carbons, cokes, glassy carbons, calcined organic polymeric compounds, mesocarbon microbead, carbon fiber, and activated carbon.

0106 A negative plate produced as follows is used in the first embodiment. A carbon material having an average particle diameter of 10$\mu$m is mixed with a solution in which vinylidene fluoride is dissolved in N-methylpyrrolidone to obtain slurry. After the slurry consisting of the mixture of the above-described substances is passed through a 70-mesh net to remove large particles, the slurry is uniformly applied to both surfaces of a negative electrode current collector consisting of a belt-shaped copper foil having a thickness of 18µm and is dried. After the slurry is compression-molded with a roll press machine, the molding is cut to obtain the belt-shaped negative plate.

0107 As the positive electrode, metal oxides such as a lithium cobalt oxide, a lithium nickel oxide, a lithium manganese oxide, a manganese dioxide, a vanadium pentoxide or a chromium oxide and metal sulfides such as a molybdenum disulfide are used as an active substance. A conductive assistant and a binding agent such as polytetrafluoroethylene are added to the positive active substance to obtain a combination of these substances. Thereafter the combination of these substances is processed into a molding by using a current collector such as stainless steel net as the core of the positive electrode. The molding formed in this manner is used as the positive electrode.

0108 In the first embodiment, as the positive electrode, a belt-shaped positive plate produced as described below is used. That is, as a conductive assistant, scaly graphite is added to the lithium cobalt oxide (LiCoO$_2$) at a mass ratio of lithium cobalt oxide : scaly graphite = 90 : 5. Both substances are mixed with each other to form a mixture. The mixture and a solution in which the polyvinylidene fluoride is dissolved in the N-methylpyrrolidone are mixed with each other to obtain slurry. After the slurry consisting of the mixture of these substances is passed through the 70-mesh net to remove large particles, the slurry is uniformly applied to both surfaces of a positive current collector consisting of an aluminum foil and dried. After the slurry is compression-molded with the roll press machine, the molding is cut to obtain the belt-shaped positive plate.

[Description of Examples]

0109 Examples 1 through 5 of the first embodiment and comparison examples 1 and 2 are described below. Although the laminated porous film of the first embodiment is described below in detail, the first embodiment of the present invention is not limited thereto.

(Example 1)

0110 0.1 mass parts by mass of 3,9-bis[4-(N-cyclohexylcarbamoyl)phenyl]-2,4,8,10-tetraoxaspiro[5.5]undecane was added to 100 parts by mass of the polypropylene resin (Prime polypro F300SV produced by Prime Polymer Corporation, MFR: 3g/10 minutes) as the β crystal nucleating agent. The above-described two components were fused and kneaded at 280°C by using a same-direction twin screw extruder (diameter: $\phi$40mm, L/D = 32) produced by Toshiba Machine Co., Ltd. to obtain a pelletized resin composition A1.

20 parts by mass of hydrogenated petroleum resin (Archon P115 produced by Arakawa Chemical Industries, Ltd.) was added to 80 parts by mass of high-density polyethylene ("Hi-ZEX3300F" produced by Prime Polymer Corporation, Density: 0.950g/cm$^3$, MFR: 1.1g/10 minutes) serving as the polyethylene resin. The above-described two components were fused and kneaded at 230°C by using the same-direction twin screw extruder to obtain a pelletized resin composition B1.

After the resin compositions A1 and B1 were extruded at 210°C by different extruders, they were extruded from a multi-layer molding T die through a two-kind three-layer feed block. After the resin compositions A1 and B1 were layered one upon another in such a way that a film thickness ratio of A1/B1/A1 after they were stretched was 3/1/3, they were solidified by cooling them with a casting roll having a temperature of 125°C to obtain a laminated unporous membrane material having a thickness of 80µm.

The laminated unporous membrane material was subjected to sequential biaxial stretching to stretch it 5.5 times longer than its original length in the MD at 100°C and thereafter 2.5 times longer than its original length in the TD at 100°C. Thereafter the laminated unporous membrane material was subjected to heat relaxation by 4% at 100°C to obtain a laminated porous film.

Various properties of the obtained laminated porous film were measured and evaluated. Table 1 shows the results.

(Example 2)

0111 20 parts by mass of linear low-density polyethylene modified with maleic anhydride ("ADMER NF308 produced by Mitsui Chemicals, Inc.) was added to 80 parts by mass of the high-density polyethylene (Hi-ZEX3300F produced by Prime Polymer Corporation, Density: 0.950g/cm$^3$, MFR: 1.1g/10 minutes) serving as the polyethylene resin. The above-described two components were fused and kneaded at 230°C by using the same-direction twin screw extruder to obtain a pelletized resin composition B2.

By using the resin composition B2 as the alternative of the resin composition B1 in extrusion conditions similar to those of the example 1, a laminated unporous membrane material having a thickness of 80µm was obtained.

The laminated unporous membrane material was subjected to sequential biaxial stretching to stretch it 4.0 times longer than its original length in the MD at 100°C and thereafter 2.5 times longer than its original length in the TD at 100°C. Thereafter the laminated unporous membrane material was subjected to heat relaxation by 4% at 100°C to obtain a laminated porous film.

Various properties of the obtained laminated porous film were measured and evaluated. Table 1 shows the results.

(Example 3)

0112 20 parts by mass of an ethylene-methyl methacrylate copolymer (Acryft CM8014 produced by Sumitomo Chemical Co., Ltd.) was added to 80 parts by mass of the high-density polyethylene (Hi-ZEX3300F produced by Prime Polymer Corporation, density: 0.950g/cm³, MFR: 1.1g/10 minutes) serving as the polyethylene resin. The above-described two components were fused and kneaded at 230°C by using the same-direction twin screw extruder to obtain a pelletized resin composition B3. Except that that the resin composition B3 was used as the alternative of the resin composition B2, a laminated porous film was obtained in a manner similar to that of the example 2.

Various properties of the obtained laminated porous film were measured and evaluated. Table 1 shows the results.

(Example 4)

0113 0.2 parts by mass of an antioxidant (B255, IRGAFOS 168/IRGANOX 1010=1/1 produced by Chiba Specialty Chemicals, Inc.)) and 0.1 parts by mass of the 3,9-bis[4-(N-cyclohexylcarbamoyl)phenyl]-2,4,8,10-tetraoxaspiro[5.5]undecane serving as the β crystal nucleating agent were added to 100 parts by mass of the polypropylene resin ("Prime polypro" F300SV, MFR: 3g/10 minutes produced by Prime Polymer Corporation). The above-described three components were fused and kneaded at 270°C by using the same-direction twin screw extruder (diameter: 40mm $\phi$, L/D = 32) produced by Toshiba Machine Co., Ltd. to obtain a pelletized resin composition A2.

20 parts by mass of microcrystalline wax (Hi-Mic 1090 produced by Nippon Seiro Co., Ltd.) and 0.3 parts by mass of dibenzylidene sorbitol (GEL ALL D produced by New Japan Science Ltd.) serving as a nucleating agent were added to 80 parts by mass of the high-density polyethylene (Hi-ZEX3300F produced by Prime Polymer Corporation, Density: 0.950g/cm³, MFR: 1.1g/10 minutes) serving as the polyethylene resin. The above-described three components were fused and kneaded at 230°C by using the same-direction twin screw extruder to obtain a pelletized resin composition B4. Except that the resin composition A2 was used as the alternative of the resin composition A1 and that the resin composition B4 was used as the alternative of the resin composition B2, a laminated porous film was obtained in a manner similar to the example 2.

Various properties of the obtained laminated porous film were measured and evaluated. Table 1 shows the results.

(Example 5)

0114 20 parts by mass of an ethylene-vinyl acetate copolymer (Novatec EVA, LV151 produced by Japan Polyethylene Corporation, MFR: 3.0g/10 minutes) was added to 80 parts by mass of the high-density polyethylene (Hi-ZEX3300F produced by Prime Polymer Corporation, Density: 0.950g/cm³, MFR: 1.1g/10 minutes) serving as the polyethylene resin. The above-described two components were fused and kneaded at 230°C by using the same-direction twin screw extruder to obtain a pelletized resin composition B5.

By using the resin composition B5 as the alternative of the resin composition B2 in extrusion conditions similar to those of the example 2, a laminated unporous membrane material having a thickness of 80μm was obtained.

The laminated unporous membrane material was subjected to sequential biaxial stretching to stretch it 4.5 times longer than its original length in the MD at 100°C and thereafter 2.0 times longer than its original length in the TD at 100°C. Thereafter the laminated unporous membrane material was subjected to heat relaxation by 5% at 100°C to obtain a laminated porous film.

Various properties of the obtained laminated porous film were measured and evaluated. Table 1 shows the results.

(Comparison Example 1)

0115 As fillers, 50 parts by mass of barium sulfate ("B-55" produced by Sakai Chemical Co., Ltd., particle diameter: 0.66pm) and 2.5 parts by mass of castor oil (HY-CASTOROIL produced by Hokoku Oil Mill Co., Ltd., molecular weight: 938) were added to 50 parts by mass of the high-density polyethylene ("Hi-ZEX2200J" produced by Prime Polymer Corporation, density: 0.964g/cm$^3$, MFR: 1.1g/10 minutes). The above-described three components were fused and kneaded at 230°C by using the same-direction twin screw extruder to obtain a pelletized resin composition B6.

By using the resin composition B6 as the alternative of the resin composition B1 in extrusion conditions similar to those of the example 1, a laminated unporous membrane material having a thickness of 80μm was obtained.

The laminated unporous membrane material was subjected to sequential biaxial stretching to stretch it 3.0 times longer than its original length in the MD at 100°C and thereafter 3.7 times longer than its original length in the TD at 100°C. Thereafter the laminated unporous membrane material was subjected to heat relaxation by 5% at 100°C to obtain a laminated porous film.

Various properties of the obtained laminated porous film were measured and evaluated. Table 1 shows the results.

(Comparison Example 2)

0116 Except that only the polypropylene resin ("Prime polypro" F300SV produced by Prime Polymer Corporation, MFR: 3g/10 minutes) was used as the alternative of the resin composition A1, the polypropylene resin was solidified by cooling it with a casting roll having a temperature of 110°C, a laminated unporous membrane material having a thickness of 80μm was obtained in an extrusion condition similar to that of the example 1.

Although an attempt of stretching the laminated unporous membrane material 4.0 times longer than its original length in the MD at 100°C, the film was broken and thus a laminated porous film was not obtained. The β crystal ratio of the laminated unporous membrane material was 0%.

0117 Various properties of the films of the examples and those of the comparison examples were measured and evaluated.

0118 (1) Ratio between Layers

A section of each laminated porous film was cut to observe the cut piece with a scanning electron microscope (S-4500 produced by Hitachi, Ltd). The ratio between layers was measured from the structures of the layers and the thicknesses thereof.

(2) Thickness

The in-plane thickness was measured at unspecified 30 points with a dial gauge of 1/1000mm. The average of the thicknesses was set as the thickness.

(3) Porosity

The porosity was obtained by measuring a substantial mass W1 of the laminated porous film and computing a mass W0 when the porosity is 0% from the density and thickness of the resin composition. Based on the following equation, the porosity was computed from the values obtained in this manner.

$$\text{Porosity (\%)} = \{(WO - W1)/WO\} \times 100$$

(4) Tensile Strength

The tensile strength was measured in accordance with JIS K7127. More specifically the tensile strength at a broken point was measured by setting conditions as follows: in both the MD and the TD, the width: 15mm, the length: 80mm, the distance between chucks: 40mm, and the crosshead speed: 200mm/minute.

(5) Measurement of Electric Resistance after Heating at 25°C

After each laminated porous film was cut in a dimension of 3.5cm square and put in a glass dish in an air atmosphere having a temperature of 25°C, a solution (Kishida Chemical Co., Ltd.) of propylene carbonate and ethylmethyl carbonate at a ratio of 1 : 1 (v/v) containing lithium perchlorate was put in the glass dish to such an extent that the porous film was soaked in the solution to permeate the solution into the laminated porous film. Thereafter the porous film was taken out of the glass dish, and excess electrolyte was wiped and placed at the center of a $\phi$ 60mm dish made of a stainless steel. After a weight, made of stainless steel, which had a diameter of $\phi$ 30mm in its bottom surface was slowly placed on the porous film, a terminal was connected to the glass dish and the weight to measure the electric resistance thereof with HIOKI LCR HiTESTER (model number: 3522-50 produced by Hioki Inc.)

(6) Measurement of Electric Resistance after Heating at 135°C for 5 Seconds)

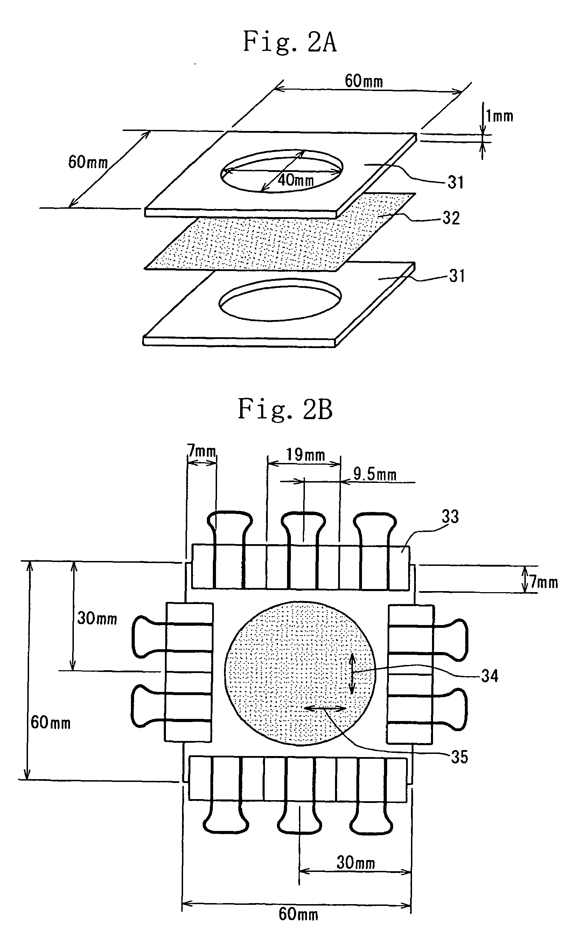

Each laminated porous film 32 was cut squarely in a dimension of 60mm (vertical length) x 60mm (horizontal length). As shown in Fig. 2(A), the laminated porous film 32 was sandwiched between two aluminum plates 31, (material: JIS standard A5052, size: vertical length: 60mm, horizontal length; 60mm, thickness: 1mm), where a circular hole having a diameter of $\phi$40mm was formed at a central portion. As shown in 2(B), the periphery of the laminated porous film 32 was fixed with a clip 33 (double clip "Christo-J35" produced by Kokuyo Co., Ltd.). Thereafter the laminated porous film 32 fixed with the two aluminum plates was immersed at the center of an oil bath, (OB-200A produced by As One Inc.) having a temperature of 135°C, where glycerin (first class produced by Nakarai Desk Co., Ltd.) was filled up to 100mm from the bottom surface. The glycerin was heated for 5 seconds. Immediately after the heating of the glycerin finished, the laminated porous film 32 was immersed for 5 minutes in a cooling bath in which separately prepared glycerin having a temperature of 25°C was filled. After the laminated porous film 32 was cleaned with 2-propanol (high grade produced by Nakarai Desk Co., Ltd.), the film was dried for 15 minutes in an air atmosphere having a temperature of 25°C. The electric resistance of the dried laminated porous film 32 was measured in accordance with the method used in the above-described (5).

(7) BD Property

Similarly to the measurement carried out in the above-described (6), after the obtained films were cut squarely in a dimension of 60mm (vertical length) x 60mm (horizontal length), they were fixed as shown in Figs. 2(A) and 2(B).
Each of the films fixed with the two aluminum plates was put in an oven (Tabai gear oven "GPH200" produced by Tabai Espec Corporation, damper was closed) whose temperature was set to 200°C. The films were taken out of the oven 2 minutes after the temperature of the oven reached 200°C again to check whether the films had the BD property from the states thereof.

○: films which maintained the original configuration thereof (they had the BD property)
x: films which could not maintain the original configuration thereof and were broken (they did not have the BD property).

When the film cannot be cut in the dimension of 60mm x 60mm, specimens may be prepared by setting the film at the circular hole disposed at the central portion of the aluminum plate and having the diameter of $\phi$40mm thereof.
0119 The $\beta$ activities of the obtained laminated porous films were evaluated as described below.

(8) Differential Scanning Calorimetry (DSC)

0120 By using a differential scanning calorimeter (DSC-7) produced by PerkinElmer Inc, each film was heated from 25°C up to 240°C at a heating speed of 10°C/minute and held for one minute. Thereafter the film was cooled from 240°C down to 25°C at the cooling speed of 10°C/minute and held for one minute. Thereafter the film was heated again from 25°C up to 240°C at the heating speed of 10°C/minute and held for one minute. When the film was heated again, whether the $\beta$ activity was present or not was evaluated as follows according to whether a peak was detected in the range of 145°C to 160°C which is the crystal melting peak temperature (Tmp) derived from the $\beta$ crystal of the polypropylene.

○: films in which Tm$\beta$ was detected in the range of 145°C to 160°C ($\beta$ activity was generated).
×: films in which Tm$\beta$ was not detected in the range of 145°C to 160°C ($\beta$ activity was not generated).

The $\beta$ activity was measured on 10mg specimens in a nitrogen atmospheric.

0121 (9) X-ray Diffraction Measurement

Similarly to the measurement of the BD property, each of the laminated porous films was cut squarely in the dimension of 60mm (vertical length) x 60mm (horizontal length) and was fixed, as shown in Figs. 2A and 2B.
Each of the films fixed to two aluminum plates was put in a blow isothermal instrument (Model: DKN602 produced by Yamato Science Corporation) having a set temperature of 180°C and display temperature of 180°C. After each film was held therein for 3 minutes, the set temperature was altered to 100°C, and the film was gradually cooled to 100°C for not less than 10 minutes. When the display temperature became 100°C, the film was taken out of the blow isothermal instrument. The film was cooled for 5 minutes in an atmosphere having a temperature of 25°C with the film bound with the two aluminum plates. Thereafter X-ray diffraction measurement was carried out on the film at the portion thereof set at the circular hole, of the aluminum plate, having the diameter of $\phi$ 40mm in the following measuring conditions.

- X-ray diffraction measuring apparatus: Model Number: XMP18A produced by Mac science Co., Ltd.
- X-ray source: CuK $\alpha$ ray, output: 40kV, 200mA
- Scanning method: 2$\theta$/$\theta$ scan, 2$\theta$ range: 5° to 25°, scanning interval: 0.05°, scanning speed: 5°/minute

The presence and nonpresence of the $\beta$ activity was evaluated from a peak derived from the (300) surface of the $\beta$ crystal of polypropylene.

○: Films in which the peak was detected in the range of 2$\theta$ = 16.0° to 16.5° (film had $\beta$ activity)
x: Films in which the peak was not detected in the range of 2$\theta$ = 16.0° to 16.5° (film did not have $\beta$ activity)

When the film cannot be cut in the dimension of 60mm x 60mm, specimens may be prepared by setting the film at the circular hole disposed at the central portion of the aluminum plate and having the diameter of $\phi$ 40mm thereof.
0122

Table 1

| | | Example1 | Example2 | Example3 | Example4 | Example5 | Comparison example1 | Comparison example2 |
|---|---|---|---|---|---|---|---|---|
| Film thickness ratio | - | 3/1/3 | 3/1/3 | 3/1/3 | 3/1/3 | 3/1/3 | 3/1/3 | 3/1/3 |
| Thickness | [μm] | 26 | 25 | 23 | 26 | 29 | 29 | |
| Porosity | [%] | 58 | 57 | 58 | 58 | 56 | 60 | |
| MD tensile strength | [Mpa] | 80 | 63 | 49 | 30 | 55 | 48 | |
| TD tensile strength | [Mpa] | 41 | 47 | 45 | 59 | 40 | 61 | |
| MD tensile strength/ TD tensile strength | - | 2.0 | 1.3 | 1.1 | 0.5 | 1.4 | 0.8 | Production is impossible because of breakage during stretching |
| Electric resistance at 25°C | [Ω] | 1.5 | 7.0 | 5.0 | 3.1 | 2.7 | 2.9 | |
| Electric resistance after heating at 135°C for five seconds | [Ω] | 238 | 143 | 101 | 5200 | 16000 | 2.7 | |
| BD property | - | ○ | ○ | ○ | ○ | ○ | ○ | |
| DSC | - | ○ | ○ | ○ | ○ | ○ | ○ | |
| X-ray diffraction measurement | - | ○ | ○ | ○ | ○ | ○ | ○ | |

0123 Table 1 shows physical property values obtained in the examples 1 through 5 and the comparison examples 1 and 2.

The laminated porous films of the examples 1 through 5 constructed in the range specified in the present invention have shut-down properties superior to the films of the comparison examples constructed out of the range specified in the present invention.

As the comparison example 1 indicates, when the resin composition in which the barium sulfate is mixed with the high-density polyethylene as the filler is disposed in the laminated porous film as the SD layer, the shut-down property is not displayed.

As the comparison example 2 indicates, when the laminated unporous membrane material has the β crystal ratio of 0% and does not have the β activity, the laminated unporous membrane material could not be made porous by stretching it. That is, when the laminated unporous membrane material does not have the β activity, the laminated porous film of the present invention cannot be produced.

0124 The laminated porous film of the second embodiment is described below.

The electric resistance of the laminated porous film of the first embodiment at 25°C is not more than 10Ω. The electric resistance of the laminated porous film thereof after it is heated at 135°C for 5 seconds is not less than 100Ω.

On the other hand, the air permeability of the laminated porous film of the second embodiment is not more than 1000 seconds/10ml at 25°C. The air permeability of the laminated porous film of the second embodiment after the laminated porous film is heated at 135°C for 5 seconds is not less than 10000 seconds/100ml.

(Air Permeability at 25°C)

0125 The laminated porous film of the second embodiment is required to have not more than 1000 seconds/100ml in its air permeability at 25°C and favorably not more than 800 seconds/100ml and more favorably not more than 500 seconds/100ml. By setting the air permeability thereof at 25°C to not more than 1000 seconds/100ml, when the laminated porous film is used as the separator for the battery, the battery is capable of having an excellent performance when it is used at a room temperature.

That the air permeability of the laminated porous film at 25°C is low means that when it is used as the separator for the battery, charge transfer can be easily accomplished, and the battery has an excellent performance, which is preferable.

As the lower limit of the air permeability, the air permeability is favorably not less than 10 seconds/100ml, more favorably not less than 50 seconds/100ml, and most favorably not less than 100 seconds/100ml. When the air permeability of the laminated porous film at 25°C is not less than 10 seconds/100ml, it is possible to prevent the occurrence of trouble such as an internal short circuit from occurring when the laminated porous film is used as the separator for the battery.

(Air Permeability after Heating for 5 Seconds at 135°C)

0126 It is important that the laminated porous film of the second embodiment of the present invention displays the SD property when it is used as the separator for the battery. Therefore when the air permeability is measured after the laminated porous film is heated for 5 seconds at 135°C, it is necessary that the air permeability is not less than 10000 seconds/100ml, favorably not less than 25000 seconds/100ml, and more favorably not less than 50000 seconds/100ml. By setting the air permeability of the laminated porous film after it is heated for 5 seconds at 135°C to not less than 10000 seconds/100ml, pores close promptly when the battery undergoes thermal runaway. Thus it is possible to prevent the occurrence of trouble such as rupture of the battery and the like.

To set the air permeability of the laminated porous film after the laminated porous film is heated at 135°C for 5 seconds to not less than 10000 seconds/100ml, it is necessary to appropriately adjust the pore diameter and the porosity. For example, it is possible to control the air permeability of the laminated porous film after the laminated porous film is heated at 135°C for 5 seconds by adding the compound (X) to the polyethylene resin and adjusting the kind and mixing amount thereof or by adding the nucleating agent to the polyethylene resin to make the crystal of the polyethylene resin very fine, although operations for obtaining the above-described electric resistance value are not limited to those described above.

By adjusting the stretching condition in a production method, it is possible to set the air permeability after the laminated porous film is heated at 135°C for 5 seconds to not less than 10000 seconds/100ml.

0127 Because other constructions of the second embodiment are similar to those of the first embodiment, the description thereof is omitted herein.

[Description of Examples]

0128 Examples 6 through 10 of the second embodiment and comparison examples 3 and 4 are shown below to describe the laminated porous film of the second embodiment of the present invention in detail below. The second embodiment of present invention is not limited thereto.

(Example 6)

0129 0.2 mass parts by mass of the antioxidant (IRGANOX B255 produced by Chiba Specialty Chemicals, Inc.) and 0.1 parts by mass of the 3,9-bis[4-(N-cyclohexylcarbamoyl)phenyl]-2,4,8,10-tetraoxaspiro[5.5]undecane serving as the β crystal nucleating agent were added to 100 parts by mass of the polypropylene resin ("Prime polypro" F300SV produced by Prime Polymer Corporation, MFR: 3g/10 minutes). The above-described three components were fused and kneaded at 270°C by using the same-direction twin screw extruder (diameter: $\phi$ 40mm, L/D = 32) produced by Toshiba Machine Co., Ltd. to obtain a pelletized resin composition A1.

20 parts by mass of the hydrogenated petroleum resin (Archon P115 produced by Arakawa Chemical Industries, Ltd.) was added to 80 parts by mass of the high-density polyethylene (Hi-ZEX3300F produced by Prime Polymer Corporation, density: 0.950g/cm$^3$, MFR: 1.1g/10 minutes) serving as the polyethylene resin. The above-described two components were fused and kneaded at 230°C by using the same-direction twin screw extruder to obtain a pelletized resin composition B1.

After the resin compositions A1 and B1 were extruded at 200°C by different extruders, they were extruded from a multi-layer molding T die through a two-kind three-layer feed block. After the resin compositions A1 and B1 were layered one upon another in such a way that the film thickness ratio of A1/B1/A1 after the resin compositions A1 and B1 were stretched was 3/1/3, they were solidified by cooling them with a casting roll having a temperature of 125°C to obtain a laminated unporous membrane material having a thickness of 80$\mu$m.

After the laminated unporous membrane material was subjected to sequential biaxial stretching to stretch it 4 times longer than its original length in the MD at 110°C and thereafter 2.5 times longer than its original length in the TD at 110°C, four sides of the laminated unporous membrane material were fixed with a heat treatment frame made of aluminum to thermally fix it at 125°C for one minute by using a hot air dryer to obtain a laminated porous film.

Various properties of the obtained laminated porous film were measured and evaluated. Table 2 shows the results.

(Example 7)

0130 20 parts by mass of the linear low-density polyethylene modified with the maleic anhydride (ADMER NF308 produced by Mitsui Chemicals, Inc.) was added to 80 parts by mass of the high-density polyethylene (Hi-ZEX3300F produced by Prime Polymer Corporation, density: 0.950g/cm$^3$, MFR: 1.1g/10 minutes) serving as the polyethylene resin. The above-described two components were fused and kneaded at 230°C by using the same-direction twin screw extruder to obtain a pelletized resin composition B2. Except that that the resin composition B2 was used as the alternative of the resin composition B1, a laminated porous film was obtained in a manner similar to that of the example 6 to obtain a laminated porous film.

Various properties of the obtained laminated porous film were measured and evaluated. Table 2 shows the results.

(Example 8)

0131 20 parts by mass of the ethylene-methyl methacrylate copolymer (Acryft CM8014 produced by Sumitomo Chemical Co., Ltd.) was added to 80 parts by mass of the high-density polyethylene (Hi-ZEX3300F produced by Prime Polymer Corporation, density: 0.950g/cm$^3$, MFR: 1.1g/10 minutes) serving as the polyethylene resin. The above-described two components were fused and kneaded at 230°C by using the same-direction twin screw extruder to obtain a pelletized resin composition B3. Except that that the resin composition B3 was used as the alternative of the resin composition B1, a laminated porous film was obtained in a manner similar to that of the example 2.

Various properties of the obtained laminated porous film were measured and evaluated. Table 2 shows the results.

(Example 9)

0132 20 parts by mass of the microcrystalline wax (Hi-Mic 1090 produced by Nippon Seiro Co., Ltd.) and 0.2 parts by mass of dibenzylidene sorbitol (GEL ALL D produced by New Japan Science Ltd.) serving as the nucleating agent were added to 80 parts by mass of the high-density polyethylene (Hi-ZEX3300F produced by Prime Polymer Corporation, Density: 0.950g/cm$^3$, MFR: 1.1g/10 minutes) serving as the polyethylene resin. The above-described three components were fused and kneaded at 230°C by using the same-direction twin screw extruder to obtain a pelletized resin composition B4. Except that the resin composition B4 was used as the alternative of the resin composition B1, a laminated porous film was obtained in a manner similar to that of the example 6.

Various properties of the obtained laminated porous film were measured and evaluated. Table 2 shows the results.

(Example 10)

0133 20 parts by mass of polyethylene wax (FT-115 produced by Nippon Seiro Co., Ltd.) and 0.2 parts by mass of the dibenzylidene sorbitol (GEL ALL D produced by New Japan Science Ltd.) serving as the nucleating agent were added to 80 parts by mass of the high-density polyethylene (Hi-ZEX3300F produced by Prime Polymer Corporation, density: 0.950g/cm$^3$, MFR: 1.1g/10 minutes) serving as the polyethylene resin. The above-described three components were fused and kneaded at 230°C by using the same-direction twin screw extruder to obtain a pelletized resin composition B7. Except that the resin composition B7 was used as the alternative of the resin composition B1, a laminated porous film was obtained in a manner similar to that of the example 6.

Various properties of the obtained laminated porous film were measured and evaluated. Table 2 shows the results.

(Comparison Example 3)

0134 Except that the high-density polyethylene (Novatec HD HF560 produced by Japan Polyethylene Corporation), density: 0.963g/cm$^3$, MFR: 7.0g/10 minutes) was used as the alternative of the resin composition B1, a laminated porous film was obtained in a manner similar to that of the example 6.

Various properties of the obtained laminated porous film were measured and evaluated. Table 2 shows the results.

(Comparison Example 4)

0135 50 parts by mass of the barium sulfate (B-55 produced by Sakai Chemical Co., Ltd., particle diameter: 0.66μm) and 2.5 parts by mass of the castor oil (HY-CA5TOROIL produced by Hokoku Oil Mill Co., Ltd.) were added to 50 parts by mass of the high-density polyethylene (Hi-ZEX2200J produced by Prime Polymer Corporation, density: 0.964g/cm$^3$, MFR: 1.1g/10 minutes). The above-described three components were fused and kneaded at 230°C by using the same-direction twin screw extruder to obtain a pelletized resin composition B6. By using the resin composition B6 as the alternative of the resin composition B1 in extrusion conditions similar to those of the example 6, a laminated unporous membrane material having a thickness of 80μm was obtained.

The laminated unporous membrane material was subjected to sequential biaxial stretching to stretch it 3.0 times longer than its original length in the MD at 100°C and thereafter 3.5 times longer than its original length in the TD at 100°C.

Various properties of the obtained laminated porous film were measured and evaluated. Table 2 shows the results.

0136 The measurement and evaluation of the ratio between the thicknesses of the layers, the thickness of each layer, the porosity, the tensile strength, the differential scanning calorimetry (DSC), and the X-ray diffraction measurement of the obtained laminated porous films of the examples and the comparison examples were performed similarly to the examples of the first embodiment and the comparison examples.

(Air Permeability at 25°C)

0137 The air permeability (second/100ml) of each of the laminated porous films was measured in an air atmosphere having a temperature of 25°C in accordance with JIS P8117. An Oken type digital display type air permeability measuring apparatus (produced by Asahi Seiko Co., Ltd.) was used to measure the air permeability.

(Measurement of Air Permeability after Heating at 135°C for 5 Seconds)

Each laminated porous film was cut squarely in a dimension of 60mm (vertical length) x 60mm (horizontal length). As shown in Fig. 2(A), the laminated porous film was sandwiched between two aluminum plates, (material: JIS standard A5052, size: vertical length: 60mm, horizontal length; 60mm, thickness: 1mm), where a circular hole having a diameter of φ 40mm was formed at a central portion. As shown in 2(B), the periphery of the laminated porous film was fixed with a clip (double clip "Christo-J35" produced by Kokuyo Co., Ltd.). Thereafter the laminated porous film fixed with the two aluminum plates was immersed at the center of an oil bath, (OB-200A produced by As One Inc.) having a temperature of 135°C, where glycerin (first class produced by Nakarai Desk Co., Ltd.) was filled up to 100mm from the bottom surface. The glycerin was heated for 5 seconds. Immediately after the heating of the glycerin finished, the laminated porous film was immersed for 5 minutes in a cooling bath in which separately prepared glycerin having a temperature of 25°C was filled. After the laminated porous film was cleaned with 2-propanol (high grade produced by Nakarai Desk Co., Ltd.), the film was dried for 15 minutes in an air atmosphere having a temperature of 25°C. The air permeability of the dried film was measured in accordance with the above-described method (air permeability at 25°C).

0138

Table 2

| | | Example6 | Example7 | Example8 | Example9 | Example10 | Comparison example3 | Comparison example4 |
|---|---|---|---|---|---|---|---|---|
| Film thickness ratio | - | 3/1/3 | 3/1/3 | 3/1/3 | 3/1/3 | 3/1/3 | 3/1/3 | 3/1/3 |
| Thickness | [$\mu$m] | 18 | 28 | 22 | 19 | 28 | 36 | 29 |
| Porosity | [%] | 55 | 61 | 60 | 63 | 59 | 65 | 60 |
| MD tensile strength | [Mpa] | 40 | 56 | 48 | 44 | 60 | 75 | 48 |
| TD tensile strength | [Mpa] | 38 | 40 | 40 | 41 | 47 | 51 | 61 |
| MD tensile strength/ TD tensile strength | - | 1.0 | 1.4 | 1.2 | 1.1 | 1.2 | 1.5 | 0.8 |
| Electric resistance at 25°C | second/100ml | 550 | 510 | 260 | 410 | 410 | 400 | 380 |
| Electric resistance after heating at 135°C for five seconds | second/100ml | 84600 | 27300 | 94000 | 81000 | 100000 | 7400 | 520 |
| BD property | - | ○ | ○ | ○ | ○ | ○ | ○ | ○ |
| DSC | - | ○ | ○ | ○ | ○ | ○ | ○ | ○ |
| X-ray diffraction measurement | - | ○ | ○ | ○ | ○ | ○ | ○ | ○ |

0139 Table 2 shows physical property values obtained in the examples 6 through 10 and the comparison examples 3 and 4.

The laminated porous films of the examples constructed in the range specified in the present invention have SD properties superior to those of the films of the comparison examples constructed out of the range specified in the present invention.

As the comparison example 3 indicates, when only the high-density polyethylene is disposed in the laminated porous film as the SD layer, the SD property is not displayed.

As the comparison example 4 indicates, when the resin composition in which the barium sulfate is mixed with the high-density polyethylene as the filler is disposed in the laminated porous film as he SD layer, the SD property is not displayed either.

0140 The laminated porous film of the third embodiment of the present invention is described below.

Similarly to the first and second embodiments, the laminated porous film of the third embodiment has also the β activity and at least two porous layers. One of the two porous layers is the layer A containing the polypropylene resin as the main component thereof. The other of the two porous layers is the layer B (shut-down layer) containing a mixed resin composition containing the polyethylene resin and the crystal nucleating agent as the main component thereof.

0141 As the polypropylene resin composing the main component of the layer A, resins similar to those used in the first and second embodiments are used. As the polypropylene resin, it is possible to use the following products commercially available: "Novatec PP" and "WINTEC" (produced by Japan Polypropylene Corporation), "VERSIFY", "Notio", and "TAFMER" (produced by Mitsui Chemicals, Inc.), "ZELAS" and "Thermorun" (produced by Mitsubishi Chemical Corporation), "Sumitomo Nobrene" and "Tafcelene" produced by Sumitomo Chemical Co., Ltd., "Prime TPO" produced by Prime Polymer Corporation, "AdfleX", "Adsyl", and "HMS-PP (PF814)" produced by SunAllomer Ltd., and "Inspire" produced by Dow Chemical Company.

0142 Similarly to the first and second embodiments, it is preferable that the layer A has the β activity.

The β activity can be considered as an index indicating that β crystal is generated in a membrane material before the membrane material is stretched. When the polypropylene resin in the membrane material generates the β crystal before the membrane material is stretched, pores are formed by stretching the membrane material. Thereby it is possible to obtain the laminated porous film having an air-permeable property.

0143 Because the β crystal nucleating agent to be added to the polypropylene resin, the mixing ratio of the β crystal nucleating agent to the polypropylene resin, the method of obtaining the β activity, the measurement as to whether the layer A has the β activity, and the computation of the β activity are similar to those of the first embodiment, the description thereof is omitted herein.

[Layer B]

0144 The layer B (SD layer) contains the mixed resin composition containing the polyethylene resin and the crystal nucleating agent as the main component thereof.

(Polyethylene resin)

0145 The thermal property of the polyethylene resin contained in the layer B is important. That is, the polyethylene resin which allows the crystal melting peak temperature of the composition composing the layer SD to be 100°C to 150°C is preferable. The crystal melting peak temperature in the present invention is a peak value of the crystal melting temperature detected when the layer B having a temperature of 25°C is heated at a heating speed of 10°C/minute in accordance with JIS k7121 by using a differential scanning calorimeter.

0146 The polyethylene resin to be used for the layer B is similar to those used in the first and second embodiments. It is possible to list low-density polyethylene, linear low-density polyethylene, linear ultra-low-density polyethylene, intermediate-density polyethylene, high-density polyethylene, and copolymers each containing ethylene as the main component thereof. That is, it is possible to exemplify copolymers and multi-component copolymers consisting of ethylene and one or two kinds of co-monomers selected from among α-olefins having 3 to 10 as the carbon number thereof such as propylene, butene-1, pentene-1, hexane-1, heptene-1, and octane-1; vinyl ester such as vinyl acetate, vinyl propionate; unsaturated carboxylic acid ester such as methyl acrylate, ethyl acrylate, methyl methacrylate, and ethyl methacrylate; and unsaturated compounds such as conjugated diene, unconjugated diene. In addition it is possible to exemplify or mixed compositions of the copolymers or the multi-component copolymers. The content of the ethylene unit of the ethylene polymers exceeds 50 mass%.

0147 Of these polyethylene resins, one or more kinds of the polyethylene resin selected from among the low-density polyethylene, the linear low-density polyethylene, and the high-density polyethylene are favorable. The high-density polyethylene is most favorable.

0148 Although the melt flow rate (MFR) of the polyethylene resin is not specifically limited, normally the melt flow rate thereof is set to favorably 0.03 to 15g/10 minutes and more favorably 0.3 to 10g/10 minutes. When the MFR is in the above-described range, the back pressure of an extruder does not become very high in a molding operation and thus a high productivity can be obtained. In the present invention, the MFR is measured in accordance with JIS K7210 in the condition where temperature is 190°C and a load is 2.16kg. 0149 The method of producing the polyethylene resin is not limited to a specific one, but it is possible to exemplify known polymerization method using a known olefin polymerization catalyst, for example, a multi-site catalyst represented by a Ziegler-Natta type catalyst and a single-site catalyst represented by a Metallocene catalyst.

(Crystal Nucleating Agent)

0150 The crystal nucleating agent to be used in the third embodiment has the effect of generating a nucleus necessary for growing a crystal while the melted polyethylene resin is being cooled. More specifically while the melted polyethylene resin is being cooled, the crystal nucleating agent serves as the portion for forming the nucleus necessary for growing the crystal. A lot of small and uniform crystals are generated by forming a well-ordered crystal structure at a high crystallization speed and forming a lot of portions for generating the nucleus. When the crystal nucleating agent is added to the polyethylene resin, the crystallization speed thereof becomes high. Thus in the differential scanning calorimetry (DSC), a behavior that a crystallization peak and a crystal melting peak become sharp.

0151 The crystal nucleating agent is required to have the above-described property and the effect of generating the nucleus for the growth of the crystal while the melted polyethylene resin is being cooled. It is possible to list a dibenzylidene sorbitol (DBS) compound, 1,3-O-bis (3,4-dimethylbenzylidene) sorbitol, dialkylbenzylidene sorbitol, diacetal of sorbitol having at least one chlorine or bromine substituent group, di(methyl or ethyl substituted benzylidene) sorbitol, bis(3,4-dialkylbenzylidene) sorbitol having a substituent group forming a carbocycle, aliphatic, alicyclic, and aromatic carboxylic acids, dicarboxylic acid or polybasic polycarboxylic acid, metal salt compounds of organic acids such as anhydrides and metal salts; bicyclic dicarboxylic acid such as cyclic bisphenol phosphate, 2-bicyclo [2.2.1]heptene dicarboxylic acid disodium salt, and salt compounds thereof; saturated metal or organic salt compounds of bicyclic dicarboxylate such as bicyclo[2.2.1]heptane-dicarboxylate; diacetal compounds such as 1,3:2,4-O-dibenzylidene-D-sorbitol, 1,3:2,4-bis-O-(m-methylbenzylidene)-D-sorbitol, 1,3:2,4-bis-O-(methylbenzylidene)-D-sorbitol, 1,3:2,4-bis-O-(m-isopropylbenzylidene)-D-sorbitol, 1,3:2,4-bis-O-(m-n-propylbenzylidene)-D-sorbitol, 1,3:2,4-bis-O-(m-n-butylbenzylidene)-D-sorbitol, 1,3:2,4-bis-O-(p-methylbenzylidene)-D-sorbitol, 1,3:2,4-bis-O-(p-methylbenzylidene)-D-sorbitol, 1,3:2,4-bis-O-(p-ethylbenzylidene)-D-sorbitol, 1,3:2,4-bis-O-(p-isopropylbenzylidene)-D-sorbitol, 1,3:2,4-bis-O-(p-n-propylbenzylidene)-D-sorbitol, 1,3:2,4-bis-O-(p-n-butylbenzylidene)-D-sorbitol, 1,3:2,4-bis-O-(2,3-dimethylbenzylidene)-D-sorbitol, 1,3:2,4-bis-O-(2,4-dimethylbenzylidene)-D-sorbitol, 1,3:2,4-bis-O-(2,5-dimethylbenzylidene)-D-sorbitol, 1,3:2,4-bis-O-(3,4-dimethylbenzylidene)-D-sorbitol, 1,3:2,4-bis-O-(3,5-dimethylbenzylidene)-D-sorbitol, 1,3:2,4-bis-O-(2,3-diethylbenzylidene)-D-sorbitol, 1,3:2,4-bis-O-(2,4-diethylbenzylidene)-D-sorbitol, 1,3:2,4-bis-O-(2,5-diethylbenzylidene)-D-sorbitol, 1,3:2,4-bis-O-(3,4-diethylbenzylidene)-D-sorbitol, 1,3:2,4-bis-O-(3,5-diethylbenzylidene)-D-sorbitol, 1,3:2,4-bis-O-(2,4,5-trimethylbenzylidene)-D-sorbitol, 1,3:2,4-bis-O-(3,4,5-trimethylbenzylidene)-D-sorbitol, 1,3:2,4-bis-O-(2,4,5-triethylbenzylidene)-D-sorbitol, 1,3:2,4-bis-O-(3,4,5-triethylbenzylidene)-D-sorbitol, 1,3:2,4-bis-O-(p-methyloxycarbonylbenzylidene)-D-sorbitol, 1,3:2,4-bis-O-(p-ethyloxycarbonylbenzylidene)-D-sorbitol, 1,3:2,4-bis-O-(p-isopropyloxycarbonylbenzylidene)-D-sorbitol, 1,3:2,4-bis-O-(p-propyloxycarbonylbenzylidene)-D-sorbitol, 1,3:2,4-bis-O-(o-n-butylbenzylidene)-D-sorbitol, 1,3:2,4-bis-O-(o-chlorobenzylidene)-D-sorbitol, 1,3:2,4-bis-O-(p-chlorobenzylidene)-D-sorbitol, 1,3:2,4-bis-O-[(5,6,7,8-tetrahydro-1-naphthalene)-1-methylene]-D-sorbitol, 1,3:2,4-bis-O-[(5,6,7,8-tetrahydro-2-naphthalene)-1-methylene]-D-sorbitol, 1,3-O-benzylidene-2,4-O-p- methylbenzylidene-D-sorbitol, 1,3-O-benzylidene-2,4-O-p-etylbenzylidene-D-sorbitol, 1,3-O-p-methylbenzylidene-2,4-O-benzylidene-D-sorbitol, 1,3-O-benzylidene-2,4-O-p-ethylbenzylidene-D-sorbitol, 1,3-O-p-ethylbenzylidene-2,4-O-benzylidene-D-sorbitol, 1,3-O-benzylidene-2,4-O-chlorobenzylidene-D-sorbitol, 1,3-O-p-chlorobenzylidene-2,4-O-benzylidene-D-sorbitol, 1,3-O-(2,4-dimethylbenzylidene)-2,4-O-benzylidene-D-sorbitol, 1,3-O-benzylidene-2,4-O-(3,4-dimethylbenzylidene)-D-sorbitol, 1,3-O-(3,4-dimethylbenzylidene-2,4-O-benzylidene-D-sorbitol, 1,3-O-p-methyl-benzylidene-2,4-O-p-ethylbenzylidene sorbitol, 1,3-p-ethyl-benzylidene-2,4-p-methylbenzylidene-D-sorbitol, 1,3-O-p-methyl-benzylidene-2,4-O-p-chlorobenzylidene-D-sorbitol, and 1,3-O-p-chloro-benzylidene-2,4-O-p-methylbenzylidene-D-sorbitol; aliphatic amide having carbon number of 11 to 22 such as sodium 2,2'-methylene-bis-(4,6-di-tert-butylphenyl)phosphate, aluminum-bis[2,2'-methylene-bis-(4,6-di-tert-butylphenyl)phosphate, phosphoric acid 2,2-methylene-bis-(4,6-di-tert-butylphenyl)sodium, oleic amide, erucamide, stearic acid amide, and behenic acid amide; inorganic particles such as 2-sodium hexahydrophthalate, silica, talc, kaolin, and calcium carbide; higher fatty acid ester such as glycerol, and glycerin monoester; and simulants.

As the crystal nucleating agent to be used in the present invention, esters of higher fatty acids are favorable and glycerin monoester is more favorable.

0152 The crystal nucleating agent is mixed with the polypropylene resin at a ratio of favorably 0.00001 to 5.0 parts by mass, more favorably 0.0001 to 3.0 parts by mass, and most favorably 0.0001 to 1 part by mass for 100 parts by mass of the polypropylene resin. In the above-described range, when the melted polyethylene resin crystallizes while it is being cooled, the number of the crystal nuclei increases. As a result, the spherulite size becomes fine, which is preferable. When the melted polyethylene resin crystallizes while it is being cooled, the crystal nucleating agent does not bleed to the surface of the film, which is preferable.

0153 As examples of the crystal nucleating agent commercially available, "GEL ALL D" (produced by New Japan Science Ltd.), "ADK STAB" series (produced by Asahi Denka Co., Ltd.), "Millad" (produced by Milliken & Company), "Hyperform" (produced by Milliken & Company), and "IRGACLEAR D" (produced by Chiba Specialty Chemicals, Inc.) are listed. As the master batch of the crystal nucleating agent, "RIKEMASTER CN" series (produced by Riken Vitamin Co., Ltd.) is exemplified.

(Compound X)

0154 It is preferable that the layer B (SD layer) contains at least one kind selected from among the alicyclic saturated hydrocarbon resin or modified substances thereof and the wax described in the first embodiment. The compound (X) shows a comparatively favorable compatibility with the polyethylene resin. When the polyethylene resin is in a melted state, the polyethylene resin becomes compatible with the compound (X). When the polyethylene resin crystallizes, the compound (X) bleeds to the crystal interface. Thus for example, in making the laminated unporous membrane material porous by stretching it, the laminated unporous membrane material can be easily made porous. Therefore it is possible to adjust the air-permeable performance of the obtained laminated porous film.

0155 As examples of wax commercially available, "Mitsui High Wax" series (produced by Mitsui Chemicals, Inc.) and "Metallocene wax" (produced by Clariant Corporation) are exemplified as polyethylene wax. "Hi-Mic" (produced by Nippon Seiro Co., Ltd.) series is exemplified as microcrystalline wax.

0156 The mixing amount of the compound (X) for 100 parts by mass of the polyethylene resin is favorably 1 to 20 parts by mass, more favorably 3 to 15 parts by mass, and most favorably 5 to 10 parts by mass. To set the mixing amount of the compound (X) to the above-described range is preferable because it is possible to sufficiently obtain the effect of displaying an intended preferable porous structure, and the stability in forming the film is preferable.

(Other Components)

0157 The layer B may contain other thermoplastic resins in a range in which they do not inhibit the properties of the laminated porous film. Although the thermoplastic resin is not restricted to specific one, it is possible to list styrene resin such as styrene, AS resin, and ABS resin; ester resin such as polyvinyl chloride, fluororesin; polyethylene terephthalate, polybutylene terephthalate, polycarbonate, and polyarylate; ether resin such as polyacetal, polyphenylene ether, polysulfone, polyether sulfone, polyether ether ketone, and polyphenylene sulfide; and polyamide resin such as nylon 6, nylon 6-6, and nylon 6-12; and ionomer.

0158 Other than the above-described compounds X, the layer B may contain a catalyst neutralizer including metallic soap, synthetic hydrotalcite compounds; an antioxidant including phenolic antioxidants, phosphorus-based antioxidants, sulfur-containing antioxidants commercially available; an antistatic agent including a compound consisting of not less than one kind selected from among fatty acid ester of polyvalent alcohol, alkyl diethanolamine, liner alkyl alcohol, fatty acid ester of polyoxyethylenealkylamine, a polyoxyethylenealkylamine compound; a hindered amine-based light stabilizer; a weathering agent; an antifog agent; an anti-blocking agent; and other transparent nucleating agents. 0159 The layer B may contain additives or other components, provided that the mixing amount thereof is in a range in which they do not inhibit the object of the present invention. As the additives, it is possible to list recycle resin generated from trimming loss such as a lug; inorganic particles such as silica, talc, kaolin, calcium carbonate, and the like; pigments such as titanium oxide, carbon black, and the like; a flame retardant; a weathering stabilizer, an antistatic agent; a crosslinking agent; a lubricant; a plasticizer; an age resistor; an antioxidant; a light stabilizer; an ultraviolet ray absorber; a neutralizing agent; an antifog agent; an anti-blocking agent; a slip agent; and a coloring agent.

[Structure of Laminated Porous Film]

0160 The construction of the laminated porous film of the third embodiment is similar to those of the first and second embodiments and is not limited to a specific one, provided that the laminated porous film has at least the layers A and B. Above all the two-kind three-layer construction of the layer A/the layer B/the layer A is especially excellent because this construction allows the curl degree of the obtained laminated porous film and the surface smoothness thereof to be favorable.

0161 The ratio between the thickness of the layer A and that of the layer B can be appropriately adjusted according to a use and an object and is not limited to a specific ratio, but the layer A (when the laminated porous film has not less than two layers, the total of the thicknesses thereof)/layer B (when the laminated porous film has not less than two layers, the total of the thicknesses thereof) is set to 1 to 10 and preferably 1 to 8. When the ratio is in the above-described range, the air permeability at 25°C is good and the air permeability after the laminated porous film is heated at 135°C for 5 seconds can be sufficiently enhanced.

0162 In addition the laminated porous film is capable of taking a three-kind three-layer form by combining another layer having other function. It is possible to layer other layers on the laminated porous film of the layers A and B or appropriately treat them. The present invention is not limited to the layered construction consisting of the layers A and B.

When the laminated porous film has layers other than the layers A and B, it is necessary to provide the laminated porous film with the other layers in such a way that the relationship between the other layers and the layers A and B does not depart from the above-described relationship. The ratio of the total of the thicknesses of the other layers to the entire thickness of 1 is 0.1 to 0.5 and favorably 0.1 to 0.3, supposing that entire thickness is 1.

[Form and Property of Laminated Porous Film]

0163 The form of the laminated porous film of the third embodiment of the present invention is similar to those of the laminated porous films of the first and second embodiments. Although the configuration of the laminated porous film of the third embodiment may be flat or tubular, the flat configuration is more favorable than the tubular shape because the former allows several products to be obtained widthwise from one sheet, which is preferable from the standpoint of productivity and in addition allows the inner surface thereof to be easily coated. The thickness of the laminated porous film of the third embodiment is 1 to 500$\mu$m, favorably 5 to 300pm, more favorably 5 to 100$\mu$m, and most favorably 10 to 40pm. When the thickness thereof is not less than 1$\mu$m and favorably not less than 10$\mu$m, the laminated porous film is capable of obtaining a substantially sufficient air-permeable property and there is no problem in view of its mechanical strength, which is preferable. When the thickness thereof is not more than 500$\mu$m and favorably not more than 50$\mu$m, the laminated porous film is capable of obtaining a substantially sufficient mechanical strength and there is no problem in view of its air-permeable property, which is preferable.

0164 The laminated porous film of the third embodiment has a large number of pores intercommunicable with one another in the thickness direction thereof and an excellent air-permeable property.

As the index of the air-permeable property, when the laminated porous film of the present invention is used as the separator of the battery, the air permeability thereof at 25°C is set to favorably 5 to 3000 seconds/100ml, more favorably 20 to 2000 seconds/100ml, most favorably 50 to 1000 seconds/100ml, and especially favorably 50 to 500 seconds/100ml.

When the laminated porous film has the air permeability not more than 3000 seconds/100ml, the pores of the laminated porous film are intercommunicable with one another and thus the laminated porous film has a sufficient air-permeable property. Therefore when the laminated porous film is used as the separator for the battery, the battery securely obtains ion conduction performance and a sufficient battery property.

Although the lower limit of the air permeability is not limited to a specific value, the air permeability is set to favorably not less than 5 seconds/100ml, more favorably not less than 20 seconds/100ml, and most favorably not less than 50 seconds/100ml. When the air permeability of the laminated porous film at 25°C is not less than 5 seconds/100ml, it is possible to maintain the mechanical strength of the separator for the battery prevent trouble such as an internal short circuit from occurring when the laminated porous film is used as the separator for the battery.

The air permeability means the degree of difficulty in pass-through of air in the thickness direction of the film and is expressed by seconds it takes for air having a volume of 100ml to pass through the film. Therefore the smaller a numerical value of the air permeability is, the more easily the air passes through the film. On the other hand, the larger the numerical value of the air permeability is, the more difficultly the air passes therethrough. That is, the smaller the numerical value of the air permeability is, the more intercommunicable pores are in the thickness direction of the film. On the other hand, the larger the numerical value of the air permeability is, the more difficultly the air passes therethrough. That is, the smaller the numerical value of the air permeability is, the less intercommunicable pores are in the thickness direction of the film. The intercommunicable property means the degree of connection or communication among the pores in the thickness direction of the film. When the laminated porous film having a low air permeability is used as the separator for the battery, the separator facilitates the movement of lithium ions, thus allowing the battery to have an excellent electrical performance, which is preferable. The air permeability is measured by the method described in the examples.

0165 It is preferable that the laminated porous film of the second embodiment of the present invention has the shut-down property when it is used as the separator for the battery. Specifically when the air permeability thereof is measured after the laminated porous film is heated for 5 seconds at 135°C, the air permeability thereof is favorably not less than 10000 seconds/100ml, more favorably not less than 25000 seconds/100ml, and most favorably not less than 50000 seconds/100ml. By setting the air permeability thereof after it is heated for 5 seconds at 135°C to not less than 10000 seconds/100ml, pores close promptly and electric current is shut off when abnormal heat generation occurs. Thus it is possible to prevent the occurrence of trouble such as rupture and the like of the battery.

The shut-down property depends on the porosity and the pore diameter. It is possible to control the air permeability of the laminated porous film after the laminated porous film is heated at 135°C for 5 seconds by adding the compound (X) to the polyethylene resin and adjusting the kind and mixing amount thereof or by adding the nucleating agent to the polyethylene resin to make the crystal of the polyethylene resin very fine, although operations for obtaining the above-described air permeability are not limited to those described above.

By adjusting the stretching condition in the production method, it is possible to set the air permeability of the laminated porous film after the laminated porous film is heated at 135°C for 5 seconds to not less than 10000 seconds/100ml.

0166 The porosity of the laminated porous film of the third embodiment is set to favorably 5 to 80% similarly to the first and second embodiments.

0167 Because the method of producing the laminated porous film of the third embodiment is similar to that of the first embodiment, the description thereof is omitted herein.

As a preferable form, it is possible to exemplify a method of forming the laminated porous film to be carried out by using the polypropylene resin forming the layer A and the mixed resin composition, containing the polyethylene resin and the crystal nucleating agent, which forms the layer B, forming a laminated unporous membrane material having the two-kind three-layer structure from a T-die by means of co-extrusion and biaxially stretching the laminated unporous membrane material.

0168 More specifically the components of the resin composition composing the layer A and those of the resin composition composing the layer B are mixed with one another respectively with the Henschel mixer, the super Henschel mixer or the tumbler-type mixer. Thereafter the components of each resin composition are fused and kneaded with the uniaxial extruder, the twin screw extruder or the kneader to pelletize the resin compositions. It is preferable that the resin composition composing the layer A contains at least the polypropylene resin and the $\beta$ crystal nucleating agent. The resin composition composing the layer B contains the polypropylene resin composition and the crystal nucleating agent and may contain the compound (X) as desired.

0169 Thereafter the obtained pellet of each resin compositions is supplied to the extruder to fuse and extrude it from the T-die adopting a co-extrusion method. As the kind of the T die to be used, both a multi type for the two-kind three-layer structure and a feed block type for the two-kind three-layer structure are exemplified.

The gap of the T die to be used is similar to that of the first embodiment.

0170 Although the extrusion processing temperature in the extrusion molding is appropriately adjusted according to the flow property of the resin composition and the moldability thereof, the extrusion processing temperature is set to favorably 180 to 300°C and more favorably 200 to 280°C. When the extrusion processing temperature is more than 180°C, the molten resin has a sufficiently low viscosity, and an excellent moldability is obtained without increasing a back pressure at a molten extrusion time, which is preferable. By setting the extrusion processing temperature to less than 300°C, it is possible to restrain the resin composition from deteriorating and thus the laminated porous film from deteriorating in its mechanical strength.

The temperature at which the membrane material is cooled to solidify it by using a cast roll is similar to that of the first embodiment. By setting the cooling temperature to 80 to 150°C, the $\beta$ crystal of the polypropylene resin is generated and grown to adjust the ratio of the $\beta$ crystal in the layer A.

0171 By setting the temperature of the cast roll to the above-described temperature range, the ratio of the $\beta$ crystal of the unstretched layer A to 30 to 100% similarly to the first embodiment. The ratio of the $\beta$ crystal of the unstretched layer A is computed by using the differential scanning calorimeter similarly to the first embodiment.

0172 Thereafter the obtained layered material is biaxially stretched. Simultaneous biaxial stretching or sequential biaxial stretching is performed.

0173 In using the sequential biaxial stretching, it is necessary to appropriately select a stretching temperature according to the composition of the resin composition to be used, the crystal melting peak temperature, and the crystallization degree. The sequential biaxial stretching is preferable because it allows the porous structure to be controlled comparatively easily and the balance between the mechanical strength and other properties such as the shrinkage factor to be taken favorably.

The stretching temperature in the vertical stretching is set to favorably 10 to 130°C and more favorably 15 to 125°C. The magnification in the vertical stretching is set to favorably 2 to 10 times and more favorably 3 to 8 times. By performing the vertical stretching in the above-described range, it is possible to prevent the film from being broken at a stretching time and generate a proper starting point of pores.

The stretching temperature in the horizontal stretching is set to favorably 90 to 150°C, more favorably 95 to 130°C, and most favorably 100 to 125°C. The magnification in the horizontal stretching is set to favorably 1.5 to 3 times, more favorably 1.8 to 2.5 times, and most favorably 1.8 to 2.3 times. By performing the horizontal stretching in the above-described range, it is possible to moderately enlarge the starting point of the pores formed by the vertical stretching and generate a fine porous structure.

The stretching speed in the stretching step is set to favorably 500 to 12000%/minute, more favorably 750 to 10000%/minute, and most favorably 1000 to 8000%/minute. By performing the stretching at the stretching speed in the above-described range, pores having a defective structure are not formed, but a fine porous structure can be generated. 0174 The laminated porous film obtained in the above-described manner is heat-treated at favorably 100 to 150°C and more favorably at 110 to 140°C to improve the dimensional stability thereof. Relaxation treatment may be performed at a rate of 1 to 30% during the heat treatment step as necessary. By uniformly cooling the laminated porous film after the heat treatment is carried out and winding it on a roll or the like, the laminated porous film of the present invention is obtained.

[Separator for Battery]

0175 Because the construction of the nonaqueous electrolyte battery accommodating the laminated porous film of the third embodiment as its separator is similar to that of the nonaqueous electrolyte battery of the first embodiment shown in Fig. 1, the description thereof is omitted herein.

[Examples and Comparison Examples]

0176 Examples 11, 12 of the third embodiment and comparison examples 5 through 8 are shown below to describe the laminated porous film of the third embodiment of the present invention in detail below. The third embodiment of present invention is not limited thereto.

Various measured values of the laminated porous films shown in the present specification and the evaluation thereof were obtained as described below. A pick-up (flow) direction in which the laminated porous film is picked up from the extruder is called vertical direction, whereas a direction perpendicular to the pick-up direction is called horizontal direction.

0177 The measurement of the ratio between the thicknesses of the layers, the thickness of each layer, the porosity, the differential scanning calorimetry (DSC), and the X-ray diffraction measurement were performed similarly to the first embodiment.

(Measurement of Air Permeability (Gurley Value) at 25°C)

0178 Samples having a diameter of $\phi$40mm were cut from obtained laminated porous films to measure the air permeability (second/100ml) in accordance with JIS P8117.

(Measurement of Air permeability after Heating at 135°C for 5 Seconds)

0179 Each laminated porous film was cut squarely in a dimension of 60mm (vertical length) $\times$ 60mm (horizontal length). As shown in Fig. 2(A), the laminated porous film was sandwiched between two aluminum plates, (material: JIS standard A5052, size: vertical length: 60mm, horizontal length; 60mm, thickness: 1mm), where a circular hole having a diameter of $\phi$40mm was formed at a central portion. As shown in 2(B), the periphery of the laminated porous film was fixed with a clip (double clip "Christo-J35" produced by Kokuyo Co., Ltd.). Thereafter the laminated porous film fixed with the two aluminum plates was immersed at the center of an oil bath, (OB-200A produced by As One Inc.) having a temperature of 135°C, where glycerin (first class produced by Nakarai Desk Co., Ltd.) was filled up to 100mm from the bottom surface. The glycerin was heated for 5 seconds. Immediately after the heating of the glycerin finished, the laminated porous film was immersed for 5 minutes in a cooling bath in which separately prepared glycerin having a temperature of 25°C was filled. After the laminated porous film was cleaned with 2-propanol (high grade produced by Nakarai Desk Co., Ltd.), the film was dried for 15 minutes in an air atmosphere having a temperature of 25°C. The air permeability of the dried film was measured in accordance with the above-described method (3).

(Example 11)

0180 To form a resin composition composing the layer A, 0.3 parts by mass of the 3,9-bis[4-(N-cyclohexylcarbamoyl)phenyl]-2,4,8,10-tetraoxaspiro[5.5]undecane serving as the β crystal nucleating agent was added to 100 parts by mass of the polypropylene resin (Prime polypro F300SV produced by Prime Polymer Corporation, MFR: 3g/10 minutes). The above-described two components were fused and kneaded at 280°C by using the same-direction twin screw extruder (diameter: $\phi$40mm, L/D = 32) produced by Toshiba Machine Co., Ltd. to obtain a pelletized resin composition A1.

To form a mixed resin composition composing the layer B, 0.04 parts by mass of glycerin monoester serving as the crystal nucleating agent and 10 parts by mass of the microcrystalline wax (Hi-Mic 1080 produced by Nippon Seiro Co., Ltd.) were added to 100 parts by mass of the high-density polyethylene (Novatec HD HF560 produced by Japan Polyethylene Corporation, density: 0.963g/cm³, MFR: 7.0g/10 minutes). The above-described three components were fused and kneaded at 230°C by using the same-direction twin screw extruder to obtain a pelletized resin composition B1.

After the resin compositions A1 and B1 were extruded at 200°C by different extruders, they were extruded from a multi-layer molding T die through a two-kind three-layer feed block. After the resin compositions A1 and B1 were layered one upon another in such a way that the film thickness ratio of A1/B1/A1 after they were stretched was 4/1/4, they were solidified by cooling them with a casting roll having a temperature of 125°C to obtain a laminated unporous membrane material having a thickness of 100$\mu$m.

The laminated unporous membrane material was stretched by using a roll stretching machine to stretch it 4.0 times longer than its original length in the vertical direction and thereafter 2.0 times longer than its original length in the lateral direction at 100°C by using a tenter stretching machine to obtain a laminated porous film.

Various properties of the obtained laminated porous film were measured and evaluated. Table 3 shows the results.

(Example 12)

0181 Except that the high-density polyethylene (Hi-ZEX3300F produced by Prime Polymer Corporation, density: 0.950g/cm$^3$, MFR: 1.1g/10 minutes) was used as a mixed resin composition composing the layer B, a resin composition B9 was formed by carrying out a method similar to that of the example 11 to obtain a laminated porous film in conditions similar to those of the example 11.

Various properties of the obtained laminated porous film were measured and evaluated. Table 3 shows the results.

(Comparison Example 5)

0182 By carrying out a method similar to that of the example 11, a porous film was obtained by uniaxially stretching the laminated unporous membrane material 4.0 times longer than its original length in the vertical direction. Table 3 shows the results. Although pores were formed to some extent by stretching the laminated unporous membrane material, intercommunicable property could not be displayed.

(Comparison Example 6)

0183 By carrying out a method similar to that of the example 11, a porous film was obtained by uniaxially stretching the laminated unporous membrane material 5.1 times longer than its original length in the vertical direction. Table 3 shows the results. Although pores were formed to some extent by stretching the laminated unporous membrane material similarly to the comparison example 5, intercommunicable property could not be displayed.

(Comparison Example 7)

0184 An operation of obtaining a laminated porous film was attempted in conditions similar to those of the example 1 by using the polypropylene resin (Prime polypro F300SV produced by Prime Polymer Corporation, MFR: 3g/10 minutes) as a resin composition composing the layer A. But in stretching the laminated unporous membrane material in the vertical direction, the laminated unporous membrane material was broken and thus a laminated porous film could not be obtained. The $\beta$ crystal ratio of the laminated unporous membrane material was 0%.

(Comparison Example 8)

0185 To form a mixed resin composition composing the layer B, as fillers, 50 parts by mass of the barium sulfate ("B-55" produced by Sakai Chemical Co., Ltd., particle diameter: 0.66$\mu$m) and 2.5 parts by mass of the castor oil (HY-CASTOROIL produced by Hokoku Oil Mill Co., Ltd., molecular weight: 938) were added to 50 parts by mass of the high-density polyethylene ("Hi-ZEX2200J" produced by Prime Polymer Corporation, density: 0.964g/cm$^3$, MFR: 1.1g/10 minutes). The above-described three components were fused and kneaded at 230°C by using the same-direction twin screw extruder to obtain a pelletized resin composition B6.

After the resin compositions A1 and B6 were extruded at 210°C by different extruders, they were extruded from a multi-layer molding T die through a two-kind three-layer feed block. After the resin compositions A1 and B6 were layered one upon another in such a way that the film thickness ratio of A1/B3/A1 after they were stretched was 3/1/3, they were solidified by cooling them with a casting roll having a temperature of 125°C to obtain a laminated unporous membrane material having a thickness of 80$\mu$m.

The laminated unporous membrane material was subjected to sequential biaxial stretching by using a roll stretching machine to stretch it 3.0 times longer than its original length in the vertical direction and 3.7 times longer than its original length in the lateral direction at 100°C by using a tenter stretching machine, the laminated unporous membrane material was subjected to heat relaxation by 5% at 100°C to obtain a laminated porous film. Table 3 shows the results.

0186

Table 3

| | | Example 11 | Example 12 | Comparison example5 | Comparison example6 | Comparison example7 | Comparison example8 |
|---|---|---|---|---|---|---|---|
| Film thickness ratio | | 4/1/4 | 4/1/4 | 4/1/4 | 4/1/4 | | 3/1/3 |
| Thickness | [μm] | 38 | 44 | 50 | 38 | | 29 |
| Porosity | [%] | 62 | 67 | 49 | 47 | Production is impossible because of breakage during stretching | 60 |
| Air permeability at 25°C | second/100ml | 320 | 408 | 99999( | 99999( | | 380 |
| Air permeability after heating at 135°C for five seconds | second/100ml | 90298 | 65254 | - | - | | 520 |
| DSC | - | ○ | ○ | ○ | ○ | × | ○ |
| Wide angle X-ray diffraction measurement | - | ○ | ○ | ○ | ○ | × | ○ |

0187 Table 3 indicates that the laminated porous film specified in the third embodiment of the present invention had a good air-permeable property and an excellent shut-down property because the air permeability thereof measured after it was heated at 135°C for 5 seconds was high. On the other hand, when the laminated unporous membrane material was uniaxially stretched in the vertical direction as in the case of the comparison examples 5 and 6, the films were incapable of displaying the intercommunicable property.

When the polypropylene-containing resin composition does not have the β activity as in the case of the comparison example 7, the film was broken when it was stretched vertically and thus a laminated porous film could not obtained.

When the crystal nucleating agent is not added to the polypropylene resin and the barium sulfate is added thereto as the filler as in the case of the comparison example 8, the obtained laminated porous film had an excellent air-permeable performance. But the air permeability of the laminated porous film measured after the laminated porous film was heated at 135°C for 5 seconds did not become high. Thus the laminated porous film did not display the shut-down property when it was used as the separator for the battery.

INDUSTRIAL APPLICABILITY

0188 Because the laminated porous film of the present invention has excellent air-permeable performance and shut-down property, the laminated porous film can be preferably utilized as the separator for the battery.

0189

EXPLANATION OF REFERENCE NUMERALS AND SYMBOLS

10:  separator for battery
20:  nonaqueous electrolyte battery
21:  positive plate
22:  negative plate
24:  positive lead
25:  negative lead
26:  gasket
27:  positive lid
31:  aluminum plate
32:  film
33:  clip
34:  vertical direction of film
35:  horizontal direction of film

**Claims**

1. A laminated porous film for a separator comprising:

   a layer A consisting of a porous layer containing polypropylene resin at not less than 50 mass% and a β crystal nucleating agent; and a layer B consisting of a porous layer containing polyethylene resin at not less than 50 mass%; and having β activity,
   wherein an electric resistance at 25°C is not more than 10Ω; and an electric resistance after said laminated porous film is heated at 135°C for 5 seconds is not less than 100Ω or/and an air permeability at 25°C is not more than 1000 seconds/100ml; and an air permeability after said laminated porous film is heated at 135°C for 5 seconds is not less than 10000 seconds/100ml.

2. A laminated porous film for a separator comprising:

   a layer A consisting of a porous layer containing polypropylene resin at not less than 50 mass% and a β crystal nucleating agent; and a layer B consisting of a porous layer containing a mixed resin composition containing polyethylene resin and a crystal nucleating agent at not less than 50 mass%; and having β activity.

3. The laminated porous film for a separator according to claim 2, wherein an electric resistance at 25°C is not more than 10Ω; and an electric resistance after said laminated porous film is heated at 135°C for 5 seconds is not less than 100Ω or/and an air permeability at 25°C is not more than 1000 seconds/100 ml; and an air permeability after said laminated porous film is heated at 135°C for 5 seconds is not less than 10000 seconds/100ml.

4. The laminated porous film according to claim 2 or 3, wherein said crystal nucleating agent contained in said layer B is higher fatty acid ester.

5. The laminated porous film for a separator according to any one of claims 1 to 4, wherein said layer B contains at least one compound selected from modified polyolefin resin, alicyclic saturated hydrocarbon resin or modified substances thereof, an ethylene copolymer, and wax.

6. The laminated porous film for a separator according to any one of claims 1 to 5, which is biaxially stretched.

7. The laminated porous film for a separator according to any one of claims 1 to 6, wherein a ratio of a MD tensile strength to a TD tensile strength is set to not less than 0.3 nor more than 15.

8. A method of producing a laminated porous film for a separator according to any one of claims 1 to 7, wherein a layer A containing polypropylene resin at not less than 50 mass% and a β crystal nucleating agent and a layer B containing polyethylene resin at not less than 50 mass% are layered one upon another in not less than two layers by co-extrusion and said layers A and B are biaxially stretched to make said layers A and B porous;
at least one of said layer A and said layer B has β activity.

9. A battery in which a laminated porous film for a battery according to any one of claims 1 to 7 is incorporated.

**Patentansprüche**

1. Laminierte poröse Folie für einen Separator, die aufweist:

eine Schicht A, die aus einer porösen Schicht besteht, die in einer Menge von nicht weniger als 50 Gew.-% Polypropylenharz und ein β-Kristallnucleationsmittel enthält; und eine Schicht B, die aus einer porösen Schicht besteht, die in einer Menge von nicht weniger als 50 Gew.-% Polyethylenharz enthält; und β-Aktivität aufweist; wobei ein elektrischer Widerstand bei 25 °C nicht mehr als 10 Ω beträgt und ein elektrischer Widerstand nach Erwärmen der laminierten porösen Folie auf 135 °C für 5 Sekunden nicht weniger als 100 Ω beträgt und/oder eine Luftdurchlässigkeit bei 25 °C nicht mehr als 1000 Sekunden/100 ml beträgt und eine Luftdurchlässigkeit nach Erwärmen der laminierten porösen Folie auf 135 °C für 5 Sekunden nicht weniger als 10000 Sekunden/100 ml beträgt.

2. Laminierte poröse Folie für einen Separator, die aufweist:

eine Schicht A, die aus einer porösen Schicht besteht, die in einer Menge von nicht weniger als 50 Gew.-% Polypropylenharz und ein β-Kristallnucleationsmittel enthält; und eine Schicht B, die aus einer porösen Schicht besteht, die ein Harzgemisch aufweist, das Polyethylenharz und ein Kristallnucleationsmittel in einer Menge von nicht weniger als 50 Gew.-% enthält, und β-Aktivität aufweist.

3. Laminierte poröse Folie für einen Separator nach Anspruch 2, wobei ein elektrischer Widerstand bei 25 °C nicht mehr als 10 Ω beträgt und ein elektrischer Widerstand nach Erwärmen der laminierten porösen Folie auf 135 °C für 5 Sekunden nicht weniger als 100 Ω beträgt oder/und eine Luftdurchlässigkeit bei 25 °C nicht mehr als 1000 Sekunden/100 ml beträgt und eine Luftdurchlässigkeit nach Erwärmen der laminierten porösen Folie auf 135 °C für 5 Sekunden nicht weniger als 10000 Sekunden/100 ml beträgt.

4. Laminierte poröse Folie für einen Separator nach Anspruch 2 oder 3, wobei das in Schicht B enthaltene Kristallnucleationsmittel ein höherer Fettsäureester ist.

5. Laminierte poröse Folie für einen Separator nach einem der Ansprüche 1 bis 4, wobei die Schicht B zumindest eine Verbindung enthält, die unter einem modifizierten Polyolefinharz, einem alicyclischen gesättigten Kohlenwasserstoffharz oder modifizierte Substanzen von diesen, einem Ethylencopolymer und Wachs ausgewählt ist.

**6.** Laminierte poröse Folie für einen Separator nach einem der Ansprüche 1 bis 5, die biaxial gestreckt ist.

**7.** Laminierte poröse Folie für einen Separator nach einem der Ansprüche 1 bis 6, wobei ein Verhältnis von MD-Zugfestigkeit zu TD-Zugfestigkeit auf nicht weniger als 0,3 und nicht mehr als 15 eingestellt ist.

**8.** Verfahren zur Herstellung einer laminierten porösen Folie nach einem der Ansprüche 1 bis 7, worin eine Schicht A, die Polypropylenharz in einer Menge von nicht weniger als 50 Gew.-% und ein β-Kristallnucleationsmittel enthält, und eine Schicht B, die Polyethylenharz in einer Menge von nicht weniger als 50 Gew.-% enthält, durch Coextrusion in nicht weniger als zwei Schichten übereinander geschichtet werden und die Schichten A und B biaxial gestreckt werden, um die Schichten A und B porös zu machen;
wobei zumindest eine der Schichten A und B β-Aktivität aufweist.

**9.** Batterie, in der eine laminierte poröse Folie für eine Batterie nach einem der Ansprüche 1 bis 7 aufgenommen ist.

**Revendications**

**1.** Film poreux stratifié pour un séparateur comprenant :

une couche A consistant en une couche poreuse contenant une résine de polypropylène à pas moins de 50 % en masse et un agent de nucléation de cristaux β ; et une couche B consistant en une couche poreuse contenant une résine de polyéthylène à pas moins de 50 % en masse ; et ayant une activité β,
dans lequel une résistance électrique à 25°C est inférieure ou égale à 10 Ω ; et une résistance électrique après que ledit film poreux stratifié est chauffé à 135°C pendant 5 secondes est supérieure ou égale à 100 Ω et/ou une perméabilité à l'air à 25°C est inférieure ou égale à 1000 secondes/100 ml ; et une perméabilité à l'air après que ledit film poreux stratifié est chauffé à 135°C pendant 5 secondes est supérieure ou égale à 10 000 secondes/100 ml.

**2.** Film poreux stratifié pour un séparateur comprenant :

une couche A consistant en une couche poreuse contenant une résine de polypropylène à pas moins de 50 % en masse et un agent de nucléation de cristaux β ; et une couche B consistant en une couche poreuse contenant une composition de résine mixte contenant une résine de polyéthylène et un agent de nucléation de cristaux à pas moins de 50 % en masse ; et ayant une activité β.

**3.** Film poreux stratifié pour un séparateur selon la revendication 2, dans lequel une résistance électrique à 25°C est inférieure ou égale à 10 Ω ; et une résistance électrique après que ledit film poreux stratifié est chauffé à 135°C pendant 5 secondes est supérieure ou égale à 100 Ω et/ou une perméabilité à l'air à 25°C est inférieure ou égale 1000 secondes/100 ml ; et une perméabilité à l'air après que ledit film poreux stratifié est chauffé à 135°C pendant 5 secondes est supérieure ou égale à 10 000 secondes/100 ml.

**4.** Film poreux stratifié selon la revendication 2 ou 3, dans lequel ledit agent de nucléation de cristaux contenu dans ladite couche B est un ester d'acide gras supérieur.

**5.** Film poreux stratifié pour un séparateur selon l'une quelconque des revendications 1 à 4, dans lequel ladite couche B contient au moins un composé choisi entre une résine de polyoléfine modifiée, une résine d'hydrocarbure saturé alicyclique ou des substances modifiées de celles-ci, un copolymère d'éthylène, et la cire.

**6.** Film poreux stratifié pour un séparateur selon l'une quelconque des revendications 1 à 5, qui est étiré biaxialement.

**7.** Film poreux stratifié pour un séparateur selon l'une quelconque des revendications 1 à 6, dans lequel un rapport d'une résistance à la traction dans la direction MD sur une résistance à la traction dans la direction TD est réglé à une valeur supérieure ou égale à 0,3 et inférieure ou égale à 15.

**8.** Procédé de production d'un film poreux stratifié pour un séparateur selon l'une quelconque des revendications 1 à 7, dans lequel une couche A contenant une résine de polypropylène à pas moins de 50 % en masse et un agent de nucléation de cristaux β et une couche B contenant une résine de polyéthylène à pas moins de 50 % en masse sont superposées en couches l'une sur l'autre selon deux couches ou plus par coextrusion et lesdites couches A et B sont étirées biaxialement pour fabriquer lesdites couches poreuses A et B ;
au moins l'une de ladite couche A et de ladite couche B a une activité β.

9. Batterie dans laquelle un film poreux stratifié pour une batterie selon l'une quelconque des revendications 1 à 7 est incorporé.

# Fig. 1

# Fig. 2A

60mm

60mm

1mm

40mm

— 31

— 32

— 31

# Fig. 2B

7mm

19mm

9.5mm

33

7mm

30mm

60mm

34

35

30mm

60mm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2883726 A
- WO 1953202 A
- WO 3443934 A
- JP 2000030683 A
- EP 1787805 A1
- WO 2509030 A
- WO 3443334 A
- WO 3739481 A

### Non-patent literature cited in the description

- *Macromol. Chem.,* 1986, vol. 187, 643-652
- *Prog. Polym. Sci.,* 1991, vol. 16, 361-404
- *Macromol. Symp.,* 1995, vol. 89, 499-511
- *Macromol. Chem.,* 1964, vol. 75, 134
- **A. ZAMBELLI et al.** *Marcomolecules,* 1975, vol. 8, 687